# FASCICULE DE BREVET EUROPEEN

(11) **EP 4 609 331 B1**
(45) Date de publication et mention de la délivrance du brevet: **07.10.2026**
(21) Numéro de dépôt: 23812853.2
(22) Date de dépôt: 26.10.2023
(51) Int. Cl.: G06Q 10/04, G06Q 50/06

(54) **PROCÉDÉ D'ESTIMATION D'UN INDICATEUR COLLECTIF DE RÉDUCTION DE CONSOMMATION ÉNERGÉTIQUE POUR UN ENSEMBLE DE DISPOSITIFS THERMIQUES, DISPOSITIF ÉLECTRONIQUE D'ESTIMATION ET PRODUIT PROGRAMME D'ORDINATEUR ASSOCIÉS**
VERFAHREN ZUR SCHÄTZUNG EINES KOLLEKTIVINDIKATORS ZUR VERRINGERUNG DES STROMVERBRAUCHS FÜR EINE GRUPPE VON THERMISCHEN VORRICHTUNGEN, ZUGEHÖRIGE ELEKTRONISCHE SCHÄTZVORRICHTUNG UND COMPUTERPROGRAMMPRODUKT
METHOD FOR ESTIMATING A COLLECTIVE INDICATOR OF REDUCTION IN POWER CONSUMPTION FOR A SET OF THERMAL DEVICES, ASSOCIATED ELECTRONIC ESTIMATING DEVICE AND COMPUTER PROGRAM PRODUCT

(30) Priorité: 26.10.2022 FR 2211153
(43) Date de publication de la demande: 03.09.2025
(73) Titulaire: TotalEnergies OneTech, 92400 Courbevoie (FR)
(72) Inventeur: IGNATIADIS, Dimitra, 92400 Courbevoie (FR); BENHAIEM, David, 78220 Viroflay (FR); LE BORGNE, Emmanuel, 92320 Chatillon (FR)
(74) Mandataire: Lavoix
(86) Numéro de dépôt international: PCT/EP2023/079969
(87) Numéro de publication internationale: WO 2024/089194

(56) Documents cités:
- GB-A- 2 562 118

## Description

La présente invention concerne un procédé d'estimation d'un indicateur collectif de réduction de consommation énergétique pour un ensemble de dispositifs thermiques.

La présente invention concerne également un dispositif électronique d'estimation d'un indicateur collectif de réduction de consommation énergétique pour un ensemble de dispositifs thermiques. La présente invention concerne également un produit programme d'ordinateur propre à mettre en œuvre un tel procédé.

L'invention concerne le domaine du contrôle de la consommation énergétique d'un ensemble de dispositifs thermiques, en particulier d'un ensemble de dispositifs thermiques à usage individuel. On entend par « usage individuel » un usage réalisé par des particuliers.

On connait du document GB 2562118 A, un procédé d'estimation d'un indicateur de consommation énergétique pour un dispositif thermique propre à piloter une température d'un fluide dans un logement.

La répartition énergétique à l'échelle d'une société telle qu'une ville, une région, un pays ou un continent souffre actuellement de deux problématiques principales.

D'une part la demande en énergie est croissante, notamment en énergie électrique. En effet, de plus en plus de dispositifs de consommation électrique équipent chaque individu ainsi que leur habitation. Cette croissance s'explique également par la croissance démographique.

D'autre part, la transition énergétique pousse au développement de nouvelles solutions de production d'énergie électrique telles que les solutions éoliennes, hydroliennes, ou solaires. Bien que ces technologies de production énergétiques présentent de nombreux avantages, chacune présente l'inconvénient d'être une source d'énergie intermittente. Autrement dit, ces sources d'énergie ne produisent pas continuellement la même quantité d'énergie. Ceci conduit à des périodes de surproduction d'énergie, i.e. lorsque la production surpasse la demande, ou à des périodes de productions insuffisantes, i.e. lorsque la demande est supérieure à la production.

La deuxième situation est particulièrement problématique puisque tous les individus et infrastructures ne pourront alors pas bénéficier de l'énergie électrique demandée.

Dans une telle situation, on connait des systèmes de réseau intelligent (de l'anglais, *smart grid*) permettant une allocation préférentielle de l'énergie électrique aux utilisateurs et/ou aux infrastructures considérés comme prioritaires.

Toutefois, cette solution est une solution du type tout ou rien. Autrement dit, la demande énergétique de certains est satisfaite, tandis que la demande énergétique d'autres est complètement insatisfaite. En particulier, les logements d'habitation ne sont généralement par considérés comme prioritaires face à d'autres infrastructures telles que les hôpitaux.

En parallèle, le développement technologique, et notamment domotique, fournit de plus en plus de dispositifs connectés au sein des habitations. Ces dispositifs ont pour avantage de pouvoir être pilotés à distance, par exemple via une application de téléphone intelligent (de l'anglais, *smartphone*)*.* Parmi ces dispositifs, certains sont particulièrement consommateurs d'énergie tels que les radiateurs, les climatiseurs, les ballons d'eau chaude, les chauffe-eaux, les réfrigérateurs et les pompes à chaleur.

L'invention vise donc à permettre une réduction intelligente de l'énergie électrique consommée en tirant profit des dispositifs thermiques connectés.
- À cet effet, l'invention a pour objet un procédé d'estimation d'un indicateur collectif de réduction de consommation énergétique selon la revendication 1.

Avec le procédé selon l'invention, il est possible de quantifier une consommation énergétique qui pourrait être économisée par les dispositifs thermiques propres à piloter la température d'un fluide dans un logement.

On entend par logement une zone propre à recevoir des utilisateurs humains.

Le logement est par exemple un logement d'habitation, un bureau d'une entreprise ou un commerce. Le logement d'habitation est par exemple un appartement ou une maison.

Selon des modes de réalisation particuliers, le procédé d'estimation est selon l'une quelconque des revendications 2 à 15.

La présente invention concerne également un produit programme d'ordinateur selon la revendication 16.
- La présente invention concerne en outre un dispositif électronique d'estimation d'un indicateur collectif de réduction de consommation énergétique selon la revendication 17.

Selon un mode de réalisation particulier, le dispositif d'estimation comprend la caractéristique suivante :
- le module d'acquisition est configuré pour acquérir en outre un écart maximal souhaité à une température de consigne,
   le module de détermination étant configuré pour déterminer l'indicateur individuel de potentiel de réduction de consommation en outre à partir de l'écart maximal souhaité.

Ces caractéristiques et avantages de l'invention apparaitront plus clairement à la lecture de la description qui va suivre, donnée uniquement à titre d'exemple non limitatif et faite en référence aux dessins annexés, sur lesquels :
- [Fig.1] la figure 1 est une vue schématique d'un système de contrôle énergétique comprenant un dispositif électronique d'estimation selon l'invention ;
- [Fig.2] la figure 2 est une représentation d'une interface présentée par le dispositif électronique d'estimation de la figure 1 ;
- [Fig. 3] la figure 3 est une représentation schématique de deux premières grandeurs d'un indicateur collectif de réduction de consommation énergétique obtenu par le dispositif électronique d'estimation représenté sur la figure 1 ;
- [Fig. 4] la figure 3 est une représentation schématique de deux deuxièmes grandeurs d'un indicateur collectif de réduction de consommation énergétique obtenu par le dispositif électronique d'estimation représenté sur la figure 1 ;
- [Fig. 5] la figure 5 est une représentation schématique d'un percentile choisi des deux premières grandeurs de l'indicateur collectif de réduction de consommation énergétique de la figure 3 ;
- [Fig. 6] la figure 6 est une représentation schématique d'un percentile choisi des deux deuxièmes grandeurs de l'indicateur collectif de réduction de consommation énergétique de la figure 4 ; et
- [Fig.7] la figure 7 est un organigramme d'un procédé d'estimation d'un indicateur collectif de réduction de consommation énergétique selon l'invention.

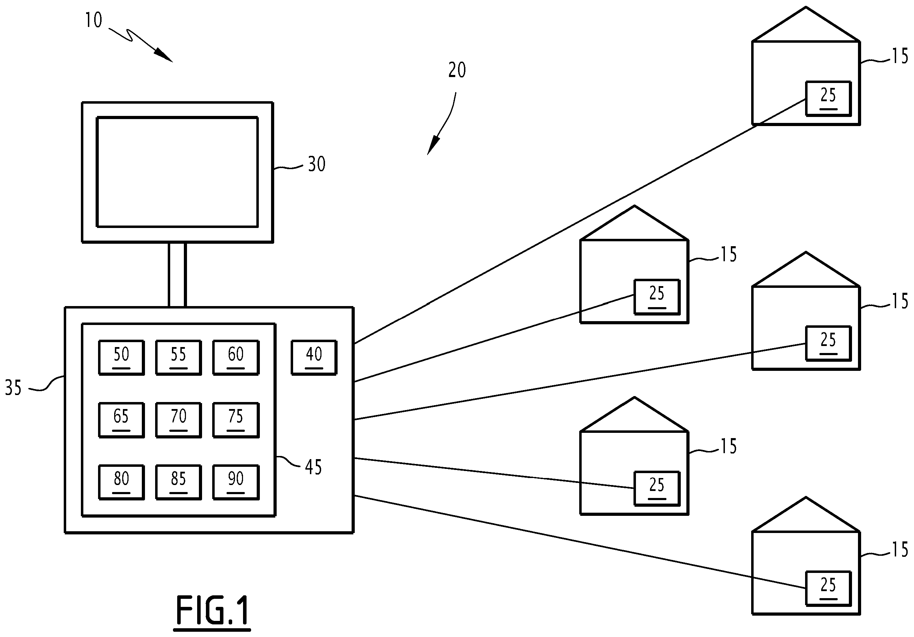

Sur la figure 1, un système de contrôle énergétique 10 est représenté.

Le système 10 comprend une pluralité de logements 15 par exemple répartis dans une ville, dans une région, dans un pays, ou sur un continent.

Le système de contrôle 10 comprend en outre un dispositif électronique d'estimation 20. Le dispositif électronique d'estimation 20 est destiné à être utilisé par un exploitant du système de contrôle 10 pour contrôler, au cours du temps, une activation ou une désactivation du fonctionnement de dispositif(s) thermique(s) 25 dans les logements 15.

Dans chacun des logements 15 est disposé un dispositif thermique 25 respectif propre à piloter la température d'un fluide à l'intérieur du logement 15. On entend par fluide, un gaz ou un liquide.

Selon un exemple non représenté, un ou plusieurs logements 15 comprennent plusieurs dispositifs thermiques 25.

Chaque dispositif thermique 25 est par exemple un radiateur. Le fluide dont la température est pilotée par le radiateur 25 est l'air à l'intérieur du logement 15.

En particulier, chaque dispositif thermique 25 est un radiateur commandable à distance. Par exemple, chaque radiateur est commandable depuis un téléphone intelligent (de l'anglais, *smartphone*) via une application telle qu'une application fonctionnant dans un environnement nuagique (de l'anglais, *cloud network).* Ainsi, chaque radiateur 25 est apte à ce que son fonctionnement soit activé ou désactivé à distance. Lorsque le radiateur 25 est en fonctionnement activé, il est configuré pour piloter la température Tᵢₙₜ à l'intérieur du logement 15 pour qu'elle atteigne une température de consigne T_{c} souhaitée.

Le dispositif électronique d'estimation 20 est par exemple un ordinateur. Le dispositif d'estimation 20 comprend alors préférentiellement un écran d'affichage 30, aussi appelé moniteur ou afficheur, et une tour 35. La tour 35 est connectée à l'écran d'affichage 30 et propre à diffuser des images sur ledit écran 30.

La tour 35 comprend de préférence un processeur 40 et une mémoire 45.

De manière connue en soi, le processeur 40 est propre à implémenter des instructions logicielles contenues dans la mémoire 45.

La mémoire 45 stocke une pluralité de modules logiciels. En particulier, la mémoire 45 stocke un module 50 d'obtention d'un modèle thermique de chaque dispositif thermique 25, un module 55 d'acquisition de paramètre(s), un module 60 de détermination d'indicateurs individuels de potentiel de réduction de consommation I_{indiv}(t), et préférentiellement un module 65 d'association d'un type de journée à chaque indicateur individuel de potentiel de réduction de consommation I_{indiv}(t), un module 70 de conversion des indicateurs individuels de potentiel de réduction de consommation I_{indiv}(t) pour une journée dite extrême, un module 75 de calcul d'une pluralité de quantiles Qᵢ, un module 80 d'estimation d'un indicateur collectif de réduction de consommation I_{col}, un module 85 d'affichage de l'indicateur collectif I_{col}, et un module 90 de pilotage d'une réduction de consommation.

En variante non représentée, chacun desdits modules stockés dans la mémoire 45 est réalisé sous la forme d'un composant de logique programmable, tel qu'un FPGA (de l'anglais, *Field Programmable Gate Array*) ou encore d'un circuit intégré, tel qu'un ASIC (de l'anglais, *Application Specific Integrated Circuit*).

Lorsque le dispositif électronique d'estimation 20 est réalisé sous la forme d'un ou plusieurs logiciels, comme représenté sur la figure 1, c'est-à-dire qu'il comprend un programme d'ordinateur, il est en outre apte à être enregistré sur un support lisible par ordinateur, non représenté. Le support lisible par ordinateur est par exemple un medium apte à mémoriser les instructions électroniques et à être couplé à un bus d'un système informatique. À titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé sur un programme d'ordinateur comprenant les instructions logicielles.

Le module d'obtention 50 est configuré pour obtenir un modèle thermique de chaque dispositif thermique 25. Le modèle thermique comprend par exemple pour chaque dispositif thermique 25, un coefficient *α_{device}* de déperdition thermique associé au dispositif thermique 25 et qui sera décrit ci-après.

Le module d'obtention 50 est par exemple configuré pour mesurer, ou obtenir des mesures, à une pluralité d'instants t successifs, de température Tᵢₙₜ(t) à l'intérieur du logement 15, de température Tₑₓₜ(t) à l'extérieur du logement 15, et de température de consigne T_{c}(t) et de puissance P(t) de chaque dispositif thermique 25. Préférentiellement, la pluralité d'instants successifs t forme des séquences de pilotage pendant lesquelles le dispositif thermique 25 pilote la température Tᵢₙₜ(t) à l'intérieur du logement 15 pour qu'elle atteigne la température de consigne T_{c}(t), et des séquences de repos pendant lesquelles aucun pilotage de la température Tᵢₙₜ(t) n'est effectué.

Le module d'obtention 50 est par exemple en outre configuré pour déterminer, pour chaque instant t de chaque séquence de repos, un coefficient *α*(*t*) instantané de déperdition thermique. Plus particulièrement, le module d'obtention 50 est configuré pour déterminer ce coefficient instantané *α*(*t*) à partir des températures Tᵢₙₜ(t), Tₑₓₜ(t) mesurées auxdits instants t, et à partir d'une durée D entre deux instants successifs t. La durée D est appelée pas de temps entre deux instants t successifs. Le module d'obtention 50 est par exemple configuré pour appliquer l'équation suivante. [MATH 1] $α \left(t\right) = \frac{{T}_{int} \left(t+D\right) - {T}_{int} \left(t\right)}{D ∗ \left({T}_{ext}\left(t\right)-{T}_{int}\left(t\right)\right)}$

Le coefficient instantané *α*(*t*) représente la variation de température Tᵢₙₜ(t+D) à l'intérieur du logement 15 pendant la durée D en fonction de la différence de température entre l'intérieur Tᵢₙₜ(t) et l'extérieur Tₑₓₜ(t) du logement 15, lors d'une séquence de repos.

Le module d'obtention 50 est en outre configuré pour calculer, pour chaque séquence de repos, un coefficient *α_{sequence}* de déperdition thermique de séquence. Le module d'obtention 50 est par exemple configuré pour calculer le coefficient de séquence *α_{sequence}* à partir des coefficients instantanés *α*(*t*) de la séquence de repos correspondante. En particulier, le module d'obtention 50 est configuré pour calculer, pour chaque séquence de repos, le coefficient de séquence *α_{sequence}* comme étant la médiane des coefficients instantanés *α*(*t*) durant ladite séquence de repos.

Le module d'obtention 50 est en outre configuré pour calculer, pour chaque dispositif thermique 25, un coefficient *α_{device}* de déperdition thermique de dispositif 25. À cet effet, le module d'obtention 50 est par exemple configuré pour sélectionner, parmi les séquences de repos, uniquement celles ayant une durée supérieure à un premier seuil prédéfini et pour lesquelles la température extérieure Tₑₓₜ(t) respecte une contrainte prédéfinie. Le premier seuil prédéfini est par exemple égal à une heure. La contrainte prédéfinie sur la température extérieure Tₑₓₜ(t) est par exemple que la température extérieure moyenne Tₑₓₜ pendant la séquence soit inférieure ou égale à 15°C. Le module d'obtention 50 est configuré pour alors calculer le coefficient *α_{device}* de déperdition thermique du dispositif 25 à partir des coefficients *α_{sequence}* de déperdition thermique de séquence correspondants aux séquences sélectionnées. Par exemple, le module d'obtention 50 est configuré pour calculer le coefficient *α_{device}* du dispositif comme étant la médiane des coefficients *α_{sequence}* des séquences sélectionnées.

En complément facultatif, le module d'obtention 50 est configuré pour calculer le coefficient *α_{device}* de déperdition thermique de dispositif 25, uniquement si le nombre de séquences de repos du dispositif thermique 25 respectant les contraintes de durée et de température extérieure Tₑₓₜ est supérieur à un deuxième seuil prédéfini, par exemple égal à 5.

On comprend alors que le coefficient de déperdition thermique de dispositif *α_{device}* représente la variation médiane de température intérieure Tᵢₙₜ(t) par unité de temps et en fonction de la température extérieure Tₑₓₜ(t), lorsque le dispositif thermique 25 ne pilote pas ladite température intérieure Tᵢₙₜ(t).

Le module d'acquisition 55 est configuré pour acquérir une durée d'effacement souhaitée *Δt* et une puissance installée *P_{inst_{device}}* de chaque dispositif thermique 25. La puissance installée *P_{inst_{device}}* de chaque dispositif thermique 25 est la puissance maximale que chaque dispositif thermique 25 est propre à déployer.

On entend par « effacement » le fait de suspendre le pilotage de la température intérieure Tᵢₙₜ d'un ou plusieurs dispositifs thermiques 25. Durant un effacement, la température de consigne T_{c}(t) n'est pas nécessairement respectée.

La durée d'effacement souhaitée *Δt* correspond à la durée maximale pendant laquelle le pilotage de la température intérieure Tᵢₙₜ de chaque dispositif thermique 25 cesseraient, alors que la température de consigne n'est pas nécessairement atteinte. Autrement dit, en l'absence d'effacement, durant ladite durée, chaque dispositif thermique 25 piloterait la température Tᵢₙₜ en activant le dispositif thermique 25.

La durée d'effacement Δ*t* est par exemple égale à 30 minutes ou 1 heure.

En complément facultatif, le module d'acquisition 55 est configuré pour acquérir en outre le nombre *nb_{device}* de dispositifs thermiques 25 dans le système de contrôle énergétique 10, un écart maximal *ε_{M}* souhaité à la température de consigne T_{c}(t) pendant la durée d'effacement Δ*t,* un type de journée, et un pourcentage de confiance souhaité %*_{conf}* qui sera décrit ci-après.

L'écart maximal souhaité *ε_{M}* est un écart maximal acceptable à la température de consigne T_{c} donnée à chaque dispositif thermique 25. Ainsi, si cet écart maximal souhaité *ε_{M}* est par exemple égal à 0,5°C, alors uniquement des effacements pour lesquels la température Tᵢₙₜ dans l'environnement 15 ne s'éloigne pas de la température de consigne T_{c}(t) de plus de l'écart maximal souhaité *ε_{M}* sont acceptables. Autrement dit, lors d'un effacement, la température intérieure Tᵢₙₜ doit respecter à tout instant t l'équation suivante : [MATH 2] ${T}_{int} \left(t\right) \geq {T}_{c} \left(t\right) - {ϵ}_{M}$

L'écart maximal souhaité *ε_{M}* est par exemple égal à 0,5°C, 0,75°C, 1°C, 1,5°C, 2°C, ou 3°C.

On entend par « type de journée », une segmentation des journées en fonction de la température extérieure Tₑₓₜ. Par exemple, l'ensemble des journées de chaque dispositif thermique 25 est segmenté en au moins deux types de journées, préférentiellement de deux à cinq types de journées, plus préférentiellement cinq types de journées, respectivement nommées : journée chaude, journée tempérée, journée froide, journée très froide, et journée extrême.

Une journée chaude est une journée pour laquelle la température extérieure Tₑₓₜ moyenne entre 7h et 15h et entre 18h et 20h, est supérieure à 15°C. Une journée tempérée est une journée pour laquelle la température extérieure moyenne Tₑₓₜ est comprise, pour la même période de temps, entre 10°C et 15°C. Une journée froide est une journée pour laquelle la température extérieure Tₑₓₜ moyenne est comprise, pour la même période de temps, entre 5°C et 10°C. Une journée très froide est une journée pour laquelle la température extérieure moyenne Tₑₓₜ, pour la même période de temps, est inférieure à 5°C. Une journée extrême est une journée étalon définie par une norme, par exemple dans les règles du mécanisme de capacité de RTE.

En variante, un plus grand nombre de types de journées est considéré. Par exemple, les types de journée sont formés par découpage des moyennes de températures extérieures en intervalles de 2°C. Ainsi, à titre d'exemples les types de journée sont : [-8 ; - 6[, [-6 ; -4[, [-4 ; -2[, [-2 ; 0[, [0 ; 2[, [2 ; 4[, [4 ; 6[, [6 ; 8[, [8 ; 10[, [10 ; 12[, [12 ; 14[, [14 ; 16[, [16 ; 18[, et [18 ; 20[.

Le pourcentage de confiance %*_{conf}* sera détaillé ci-après.

Préférentiellement, le module d'acquisition 55 est configuré pour acquérir les paramètres précités, depuis un utilisateur du dispositif d'estimation 20, par exemple via des périphériques non-représentés sur la figure 1.

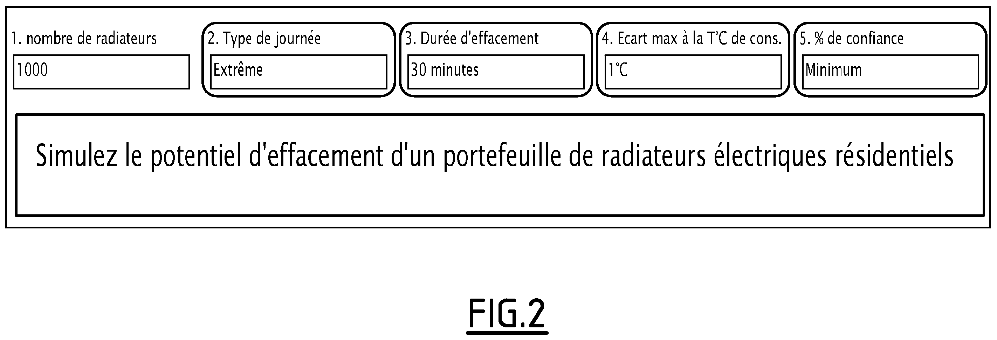

Par exemple, le dispositif d'estimation 20 est configuré pour afficher sur l'afficheur 30, l'interface présentée sur la figure 2. Ainsi, l'utilisateur du dispositif d'estimation 20 interagit avec le dispositif d'estimation 20 pour renseigner les paramètres, i.e. le nombre *nb_{device}* de dispositifs thermiques 25, le type de journée, la durée d'effacement Δ*t,* l'écart maximal souhaité *ε_{M}* et le pourcentage de confiance %*_{conf}.* Ceci est fait par exemple via des boutons et/ou des menus déroulants.

L'interface représentée sur la figure 2, indique par exemple en outre un tutoriel présentant la manière d'interagir avec cette interface. En particulier, lorsque les dispositifs thermiques 25 sont des radiateurs, ce tutoriel indique que les informations complémentaires suivantes sur les entrées à renseigner :
- Nombre de radiateurs : le nombre de radiateurs dans votre portefeuille,
- Type de journée : définie à partir de la température extérieure moyenne sur la journée entre les horaires suivants : 7h-15 et 18h-20h et à partir de la journée à températures extrême selon les règles de mécanisme de capacité RTE,
- Durée d'effacement : durée maximum de l'effacement ciblé,
- Ecart max à la TC de consigne : contrainte d'écart entre la température intérieure et la température de consigne, lors d'un effacement. Si la contrainte est atteinte, l'effacement s'arrête pour le radiateur en question avant la fin du créneau d'effacement, et
- % de confiance : pourcentage de chance que l'output atteigne une certaine valeur.

Le tutoriel met en avant la présence d'un bouton « Run all » et indique que l'utilisateur doit cliquer dessus.

Enfin, le tutoriel précise la manière dont l'indicateur collectif I_{col} doit être interprété. En particulier, le tutoriel indique que les sorties suivantes sont obtenues pour chaque créneau tₕ, comme décrit ci-après :
- le pourcentage de la puissance installée qui est effaçable (en %),
- le facteur de surdimensionnement (l'inverse de la part de la puissance installée qui est effaçable),
- le volume d'énergie effaçable (en KWh),
- le capacité moyenne effaçable (en KW).

Selon une variante non-représentée, l'utilisateur du dispositif d'estimation 20 interagit avec le dispositif d'estimation 20 pour renseigner en outre : la puissance moyenne des dispositifs thermiques 25. Le module de détermination 60 est configuré pour déterminer, pour chaque dispositif thermique 25, un indicateur individuel de potentiel de réduction de consommation I_{indiv}(t) à la pluralité d'instants t successifs. L'indicateur individuel de potentiel de réduction de consommation I_{indiv}(t) est aussi appelé indicateur individuel dans la suite de la description. Pour cela, le module de détermination 60 est configuré pour déterminer chaque indicateur individuel I_{indiv}(t) à partir du modèle thermique *α_{device}* et de la durée d'effacement souhaitée *Δt.* Préférentiellement, le module de détermination 60 détermine ledit indicateur individuel I_{indiv}(t) en outre à partir de l'écart maximal souhaité *ε_{M}.*

A cet effet, le module de détermination 60 est configuré pour calculer, à chaque instant t, l'énergie *E_{cons}*(*t* → *t + D*) consommée par chaque dispositif thermique 25 entre l'instant t et l'instant successif t+D, i.e. à chaque pas de temps D. Préférentiellement, le module de détermination 60 est configuré pour calculer cette énergie *E_{cons}*(*t* → *t + D*) à partir de la puissance P(t) du dispositif thermique 25 et du pas de temps D, par exemple selon l'équation suivante. [MATH 3] ${E}_{cons} \left(t\to t+D\right) = P \left(t\right) ∗ \frac{D}{60}$

Le module de détermination 60 est en outre configuré pour, à chaque instant t, simuler l'évolution de la température intérieure Tᵢₙₜ(t) en l'absence de pilotage de la température intérieure Tᵢₙₜ(t) par le dispositif thermique 25. Par exemple, l'évolution de la température suit l'équation suivante. [MATH 4] ${T}_{int} \left(t+δt\right) = {T}_{int} \left(t\right) + {α}_{device} ∗ δt ∗ \left({T}_{ext}\left(t\right)-{T}_{int}\left(t\right)\right)$ où t est l'instant auquel est calculé l'évolution de la température intérieure Tᵢₙₜ(t), et *δt* est une durée inférieure à la durée d'effacement souhaitée Δ*t.*

Le module de détermination 60 est configuré pour déterminer s'il existe une durée *δt* au bout de laquelle la température intérieure Tᵢₙₜ(t+*δt*) s'écarte de la température de consigne T_{c}(t) d'une valeur égale à l'écart maximal souhaité *ε_{M}.* Autrement dit, le module de détermination 60 est configuré pour déterminer s'il existe une durée *δt* respectant l'équation suivante : [MATH 5] ${T}_{c} - {T}_{int} \left(t+δt\right) = {ϵ}_{M}$

Le module de détermination 60 est configuré pour, s'il existe une telle durée *δt* alors déterminer cette durée *δt* comme la durée effective d'effacement. Autrement dit, l'effacement n'aura lieu que pendant la durée *δt*, si la durée *δt* est inférieure ou égale à la durée d'effacement souhaitée Δ*t,* sinon il aura lieu pendant la durée d'effacement souhaitée Δ*t.* Ainsi, partant de l'instant t, l'effacement aura lieu à tous instants successifs inférieurs à *t* + *δt*, la durée *δt* étant par exemple différente d'un dispositif thermique 25 à un autre.

Le module de détermination 60 est configuré pour déterminer, pour chaque instant tᵢ, tᵢ₊1 dans la durée d'effacement effective, l'énergie *E_{cons}*(*tᵢ* → *t*_{*i*+1}) consommée par le dispositif thermique 25.

Pour chaque instant t et pour chaque dispositif thermique 25, le module de détermination 60 est configuré pour calculer un pourcentage %*_{eff}*(*t* → *t* + Δ*t*) de puissance installée de l'ensemble des dispositifs thermiques 25 propre à être économisé lors d'un créneau tₕ, aussi appelé pourcentage de puissance installée effaçable %*_{eff}*(*t* → *t* + Δ*t*) comme étant égal au rapport entre la puissance effaçable *P_{eff}*(*t-> t* + Δ*t*) et la puissance qui aurait été consommée si le dispositif thermique 25 fonctionnait à pleine puissance, i.e. à la puissance installée durant la durée d'effacement souhaitée Δ*t*, par exemple selon l'équation suivante [MATH 6] ${%}_{eff} \left(t\to t+Δt\right) = 100 ∗ \frac{{P}_{eff} \left(t->t+Δt\right)}{{Pinst}_{device}} = 100 ∗ \frac{{\sum }_{{t}_{i} = t}^{Δ t} {E}_{cons} \left({t}_{i}->{t}_{i + 1}\right)}{{Pinst}_{device} ∗ Δ t}$
où *E_{cons}*(*tᵢ*-> *t*_{*i*+1}) est égal à zéro si la température intérieure Tᵢₙₜ(t) s'éloigne de la température de consigne T_{c}(t) de plus que de l'écart maximal souhaité *ε_{M},* et *E_{cons}*(*tᵢ-> t*_{*i*+1}) respecte l'équation 3, et
*Pinst_{device}* est la puissance installée du dispositif thermique 25.

Un créneau tₕ est un créneau horaire délimitant une durée entre deux instants choisis. Tous les créneaux tₕ ont par exemple une même durée.

Le module de détermination 60 est configuré pour ensuite déterminer, pour chaque instant t et pour chaque dispositif thermique 25, un indicateur individuel respectif I_{indiv}(t), par exemple comme étant égal au pourcentage de puissance effaçable %*_{eff}*(*t* → *t* + Δ*t*), respectant ainsi l'équation suivante. [MATH 7] ${I}_{indiv} \left(t\right) = {%}_{eff} \left(t\to t+Δt\right)$

L'indicateur individuel I_{indiv}(t) représente donc le rapport entre l'énergie consommée effaçable pendant la durée d'effacement souhaitée Δ*t* et l'énergie qui aurait été consommée si le dispositif thermique 25 fonctionnait à pleine puissance.

Le module d'association 65 est configuré pour associer, à chaque indicateur individuel I_{indiv}(t), un type de journée parmi les types de journée précités. Préférentiellement, le module d'association 65 est configuré, pour associer, à chaque indicateur individuel I_{indiv}(t), un type de journée parmi une journée chaude, une journée tempérée, une journée froide, ou une journée très froide.

Le module d'association 65 est configuré pour associer le type de journée à chaque indicateur individuel I_{indiv}(t) en fonction de la température extérieure moyenne de la journée associée. La température extérieure moyenne est par exemple calculée entre 7h et 15h et entre 18h et 20h, pour le dispositif thermique 25 en question.

Le module de conversion 70 est configuré pour convertir chaque puissance effaçable *P_{eff}*(*t* → *t* + Δ*t*) en une puissance effaçable extrême *P_{eff_{extrême}}*(*t* → *t* + Δ*t*), afin de déterminer un indicateur individuel I_{indiv}(t) correspondant à un indicateur de référence associé à la journée de type extrême. À cet effet, le module de conversion 70 est configuré pour appliquer les équations suivantes. [MATH 8] $\begin{matrix}Δ {P}_{{Chro}_{PUI \left[i, j\right]}} = {P}_{{eff}_{\left[i, j\right]}} - {P}_{{eff}_{\left[i,j-7\right]}} \\ Δ {T}_{{Chro}_{T \left[i, j\right]}} = {TFLS}_{\left[i, j\right]} - {TFLS}_{\left[i,j-7\right]} \\ Gradient = min \left(\frac{{\sum }_{j} Δ {P}_{{Chro}_{PUI \left[i, j\right]}} ∗ Δ {T}_{{Chro}_{T \left[i, j\right]}}}{{\sum }_{j} Δ {T}_{{Chro}_{T \left[i, j\right]}} ∗ Δ {T}_{{Chro}_{T \left[i, j\right]}}}, 0\right) \\ {P}_{{eff}_{extr ê me}} \left(t\to t+Δt\right) = {P}_{eff} \left(t\to t+Δt\right) + Gradient \left(t\right) ∗ \left({T}_{extr ê me}\left(t\right)-TFLS\left(t\right)\right)\end{matrix}$
où *P*_{*eff*_{[}*i, j*]} est la puissance effaçable *P_{eff}*(*t-> t* + Δ*t*) par un dispositif thermique 25 pendant un créneau *i* à un jour *j,*
*P*_{*eff*_{[}*i, j*-7]} est la puissance effaçable *P_{eff}*(*t-> t* + Δ*t*) par le même dispositif thermique 25 pendant le même créneau *i* à un jour *j* - 7 une semaine avant le jour *j,*
T_{extrême}(t) est une température extrême représentant une chronique de 48 valeurs de températures, par pas de temps demi-horaire, telle que présentée dans l'Annexe 1.1.2 des règles du mécanisme de capacité de RTE,
TFLS(t) est une température correspondant à une moyenne pondérée de températures demi-horaires de 32 stations météo dont le résultat est ensuite lissé, tel que disponible sur le site internet https://data.enedis.fr/explore/dataset/donnees-de-temperature-et-de-pseudo-rayonnement/information/, et
*Gradient*(*t*) représente une chronique de valeurs en Watt par degré Celsius à un pas demi-horaire pour chaque dispositif thermique 25, associée à un couple de deux chroniques, la première chronique étant une chronique de puissances à un pas demi-horaire et la deuxième chronique étant une chronique de Température France Lissée (TFLS), tel qu'expliqué en Annexe E des règles du mécanisme de capacité de RTE.

Le module de conversion 70 est configuré pour déterminer l'indicateur I_{indiv}(t) de référence correspondant à la journée de type extrême, comme étant égal au pourcentage de puissance effaçable extrême %*_{eff_{extrême}}*(*t* → *t* + Δ*t*), par exemple selon l'équation suivante : [MATH 9] ${%}_{{eff}_{extr ê me}} \left(t\to t+Δt\right) = 100 ∗ \frac{{P}_{{eff}_{extr ê me}} \left(t\to t+Δt\right)}{{Pinst}_{device}}$

Le module de calcul 75 est configuré pour calculer, à partir de tous les indicateurs individuels déterminés I_{indiv}(t), et pour chaque type de journée, des quantiles Q_{I}(tₕ) d'indicateur individuel. Autrement dit, le module de calcul 75 est configuré pour calculer, pour une pluralité de créneaux tₕ, quel pourcentage de la puissance installée est au moins économisable par 50% des dispositifs thermique 25, par 20% des dispositifs thermiques 25, par 80% des dispositifs thermiques 25, etc. Les créneaux tₕ sont espacés les uns des autres d'une durée égale à la durée d'effacement souhaitée Δ*t.* Ainsi, le créneau tₕ commence à un instant *tᵢ* et s'étend jusqu'à l'instant *tᵢ* + Δ*t.*

Par exemple, si la durée d'effacement souhaitée Δ*t* est égale à 30 min, alors 48 créneaux tₕ sont considérés.

Le module d'estimation 80 est configuré pour estimer, pour chaque créneau tₕ, l'indicateur collectif I_{col}(tₕ) de réduction de consommation énergétique à partir des indicateurs individuels I_{indiv}(t). À cet effet, le module d'estimation 80 est configuré pour filtrer, les indicateurs individuels I_{indiv}(t) associés au type de journée acquis par le module d'acquisition 55.

Le module d'estimation 80 est configuré pour ensuite itérer un premier nombre de fois les actions suivantes.

Pour chacun du premier nombre de fois, le module d'estimation 80 est configuré pour sélectionner, pour chaque créneau tₕ, aléatoirement un deuxième nombre de quantiles Qₗ(tₕ), par exemple égal au nombre *nb_{device}* de dispositifs thermiques 25, parmi les quantiles Q_{I}(tₕ) correspondant aux indicateurs individuels filtrés. Toujours pour chacun du premier nombre de fois, le module d'estimation 80 est configuré pour calculer une moyenne des quantiles Q_{I}(tₕ) sélectionnés. Ainsi, le module d'estimation 80 est configuré pour obtenir, pour chaque créneau tₕ, un nombre de quantiles Q_{I}(tₕ) moyennés égal au premier nombre. À titre d'exemple, le premier nombre est égal à 1000 et le deuxième nombre est égal à 500. Ainsi, le module d'estimation 80 est configuré pour calculer, pour chaque créneau tₕ, 1000 quantiles Q_{I}(tₕ) moyennés, chacun obtenu en moyennant 500 quantiles Qₗ(tₕ) sélectionnés aléatoirement parmi les quantiles Qᵢ(tₕ) correspondant aux indicateurs individuels I_{indiv}(t) filtrés. Le module d'estimation 80 est ensuite configuré pour ordonner, pour chaque créneau tₕ, les moyennes des quantiles Qᵢ(tₕ) calculés, par exemple du plus petit au plus grand.

Ainsi, le module d'estimation 80 est configuré pour obtenir, pour chaque créneau tₕ, une distribution de quantiles Qᵢ(tₕ). La distribution de quantiles Qᵢ(tₕ) forme alors, pour chaque créneau tₕ, une distribution du pourcentage %_{eff}(tₕ) de la puissance installée effaçable pendant le créneau tₕ.

Le module d'estimation 80 est configuré pour estimer les percentiles des quantiles ordonnés pour chaque créneau Perc(%_{eff}(tₕ)).

En complément facultatif, le module d'estimation 80 est en outre configuré pour calculer, pour chaque créneau tₕ et pour chaque moyenne de quantile, un facteur de surdimensionnement *f*(*tₕ*) dont chaque percentile respecte l'équation suivante. [MATH 10] $Perc \left(f\left({t}_{h}\right)\right) = \frac{1}{Perc \left({%}_{eff}\left({t}_{h}\right)\right) / 100}$ où *Perc* est la fonction percentile.

De même, le module d'estimation 80 est par exemple configuré pour calculer, pour chaque créneau tₕ, une quantité d'énergie effaçable *E_{effaçable}*(*tₕ*), aussi appelé volume d'énergie effaçable, dont chaque percentile respecte l'équation suivante. : [MATH 11] $Perc \left({E}_{effa ç able}\left({t}_{h}\right)\right) = Perc \left({%}_{eff}\left({t}_{h}\right)\right) ∗ {Pinst}_{device} ∗ {nb}_{device} ∗ \frac{Δ t}{60}$
où *Pinst_{device}* est la puissance installée moyenne des dispositifs thermiques 25 dans le système 10, et
*nb_{device}* est le nombre de dispositifs thermiques 25 dans le système 10.

En outre, le module d'estimation 80 est configuré pour calculer, pour chaque créneau tₕ, une capacité moyenne effaçable *P_{effaçable}*(*tₕ*), par exemple dont les percentiles vérifient l'équation suivante. [MATH 12] $Perc \left({P}_{effa ç able}\left({t}_{h}\right)\right) = Perc \left({%}_{eff}\left({t}_{h}\right)\right) ∗ {Pinst}_{device} ∗ {nb}_{device}$

L'indicateur collectif I_{col}(tₕ) comprend avantageusement, pour chaque créneau tₕ, les pourcentages de puissance installée propres à être économisés %*_{eff}*(tₕ), calculés par le module d'estimation 80. Préférentiellement, l'indicateur collectif comprend en outre, pour chaque créneau tₕ, les facteurs de surdimensionnement *f*(*tₕ*), les quantités d'énergie effaçables *E_{effaçable}*(*tₕ*), et les capacités moyennes effaçables *P_{effaçable}*(*tₕ*).

Le module d'affichage 85 est configuré pour afficher, par exemple sur l'afficheur 30, l'indicateur collectif I_{col}(tₕ) obtenu par le module d'estimation 80.

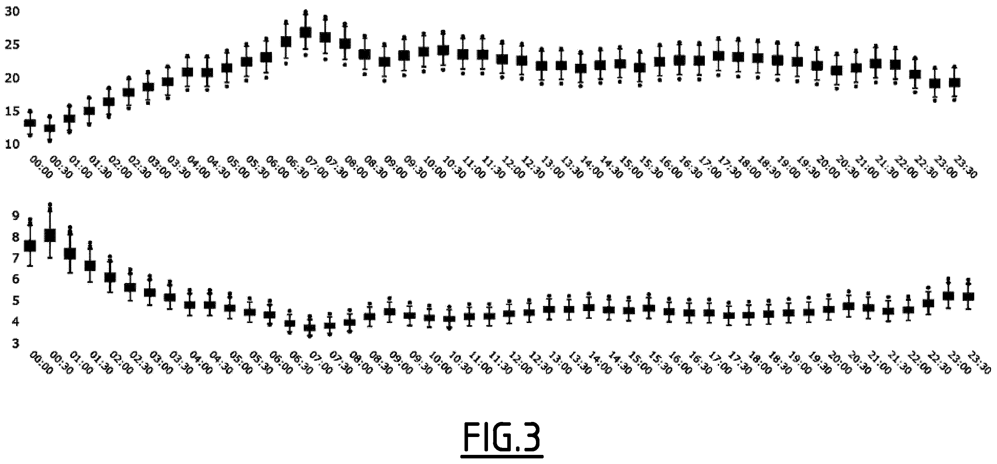

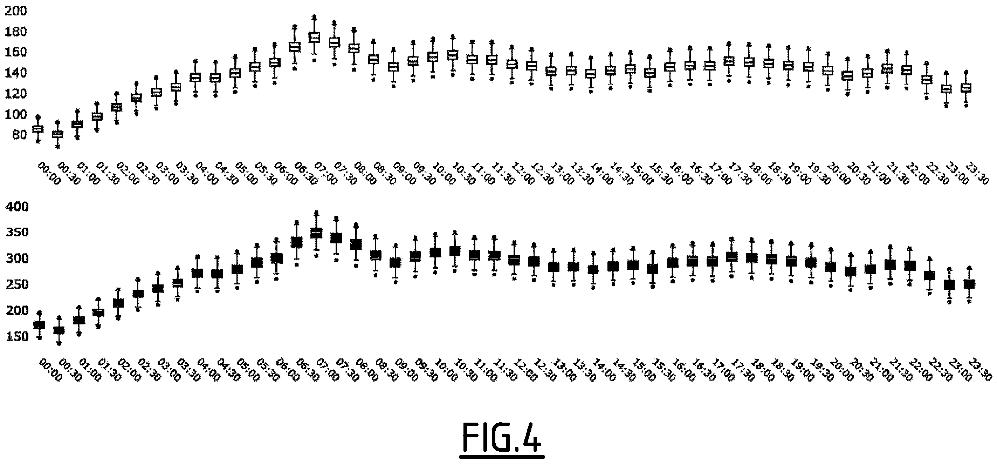

Sur la partie haute de la figure 3, la distribution d'un pourcentage %_{eff}(tₕ) de chaque créneau tₕ est représentée. Ceci correspond à un exemple d'affichage de l'indicateur collectif I_{col}(tₕ) obtenu par le module d'estimation 80. Sur la partie basse de la figure 3, la distribution de facteurs de surdimensionnement *f*(*tₕ*) est représentée. Sur la partie haute de la figure 4, la distribution de quantités d'énergie effaçables *E_{effaçable}*(*tₕ*) est représentée. Sur la partie basse de la figure 4, la distribution de capacités moyennes effaçables *P_{effaçable}*(*tₕ*), est représentée.

En complément facultatif, lorsque le pourcentage de confiance %*_{conf}* est acquis par le module d'acquisition 55, le module d'affichage 85 est configuré pour alors n'afficher que le percentile correspondant au pourcentage de confiance %*_{conf}* dans la distribution d'un pourcentage %_{eff}(tₕ). Il en va de même pour les distributions de facteur de surdimensionnement *f*(*tₕ*), de quantité d'énergie effaçable *E_{effaçable}*(*tₕ*), et de capacité moyenne effaçable *P_{effaçable}*(*tₕ*).

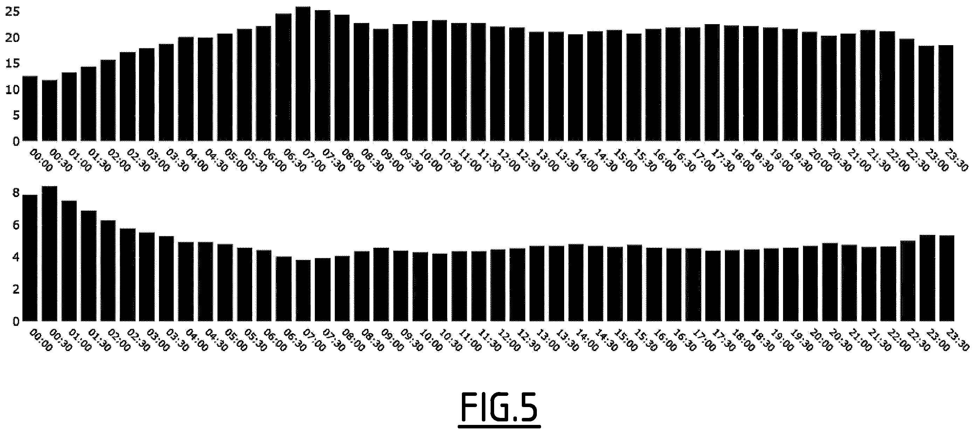

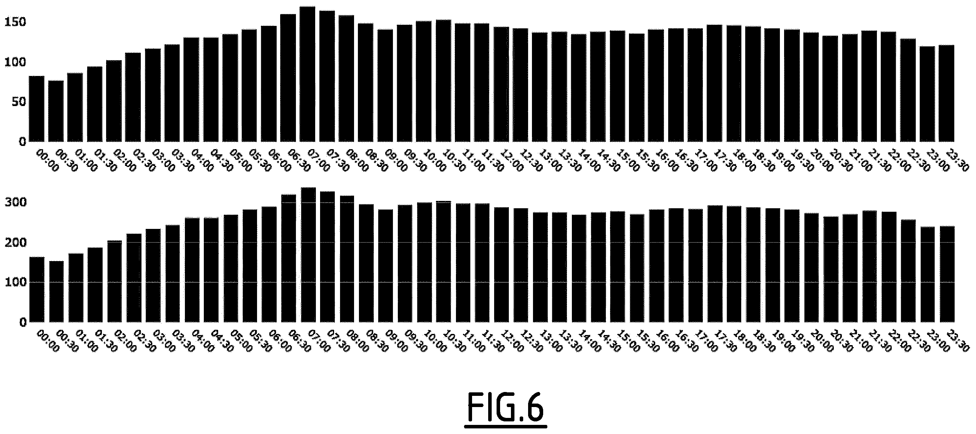

Sur la partie haute de la figure 5 le percentile de pourcentage effaçable %_{eff}(tₕ) correspondant à un pourcentage de confiance %*_{conf}* de 90% est représenté. Sur la partie basse de la figure 5, le percentile de facteur de surdimensionnement *f*(*tₕ*) correspondant à un pourcentage de confiance %*_{conf}* de 90% est représenté. Sur la partie haute de la figure 6, le percentile de quantité d'énergie effaçable *E_{effaçable}*(*tₕ*) correspondant à un pourcentage de confiance %*_{conf}* de 90% est représenté. Sur la partie basse de la figure 6, le percentile de capacité moyenne effaçable *P_{effaçable}*(*tₕ*) correspondant à un pourcentage de confiance %*_{conf}* de 90% est représenté.

Le module de pilotage 90 est configuré pour commander le pilotage de la stratégie d'effacement. Autrement dit, le module de pilotage 90 est configuré pour envoyer une instruction d'arrêt du pilotage de la température intérieure Tᵢₙₜ(t) au(x) dispositif(s) thermique(s) 25 en fonction de l'effacement souhaité.

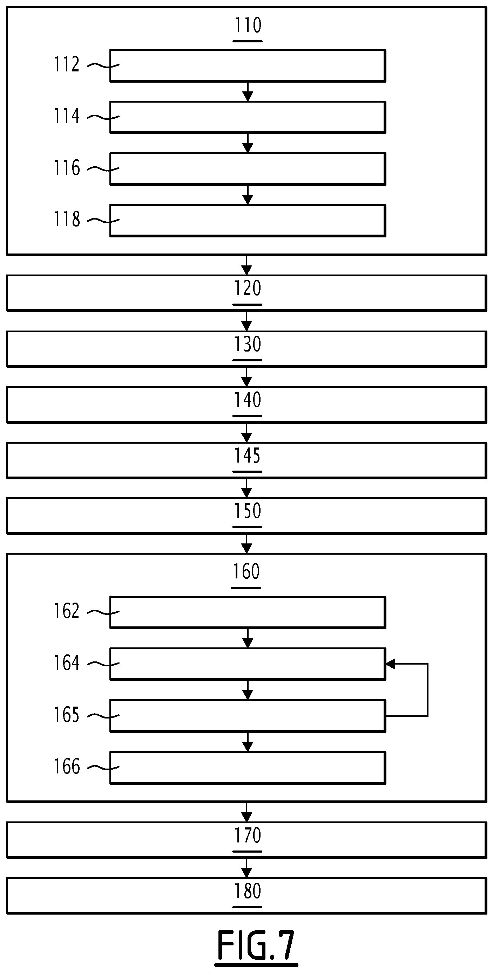

Le fonctionnement du système de contrôle énergétique 10 et plus particulièrement du dispositif électronique d'estimation 20 va maintenant être décrit en référence à la figure 7 illustrant un organigramme d'un procédé d'estimation de l'indicateur collectif I_{col}(tₕ) de réduction de consommation, selon l'invention.

Lors d'une étape d'obtention 110, le module d'obtention 50 obtient le modèle thermique *α_{device}* de chaque dispositif thermique 25.

Pour cela, l'étape d'obtention 110 comprend préférentiellement une sous-étape de mesure 112 lors de laquelle le module d'obtention 50 acquiert à la pluralité d'instants t, les mesures de température intérieure Tᵢₙₜ(t), de température extérieure Tₑₓₜ(t), et avantageusement les mesures de température de consigne T_{c}(t) et de puissance P(t), depuis chaque dispositif thermique 25.

Puis, l'étape d'obtention 110 comprend une sous-étape de détermination 114, lors de laquelle le module d'obtention 50 détermine, pour chaque instant t de chaque séquence de repos, le coefficient instantané de déperdition thermique *α*(*t*), par exemple à partir des températures mesurées Tᵢₙₜ(t), Tₑₓₜ(t), et à partir d'une durée D entre deux instants t successifs. Pour cela, le module d'obtention 50 applique par exemple l'équation 1.

Puis, l'étape d'obtention 110 comprend de préférence une première sous-étape de calcul 116 lors de laquelle le module d'obtention 50 calcule le coefficient de déperdition thermique de séquence *α_{sequence}* à partir des coefficients instantanés de déperdition thermique *α*(*t*) de la séquence de repos, par exemple par calcul d'une médiane des coefficients instantanés *α*(*t*).

Ensuite, l'étape d'obtention 110 comprend une deuxième sous-étape de calcul 118 lors de laquelle le module d'obtention 50 calcule le coefficient de déperdition thermique *α_{device}* du dispositif 25 à partir des coefficients de déperdition thermique de séquence *α_{sequence}* de chaque séquence respectant les contraintes précitées, par exemple par calcul d'une médiane des coefficients de séquence *α_{sequence}*.

Lors d'une étape d'acquisition 120, le module d'acquisition 55 acquiert la durée d'effacement souhaitée *Δt.* Préférentiellement, lors de l'étape d'acquisition 120, le module d'acquisition 55 acquiert également le nombre *nb_{device}* de dispositifs thermiques 25, le type de journée, l'écart maximal souhaité *ε_{M}* à la température de consigne T_{c}(t) et optionnellement le pourcentage de confiance %*_{conf}.*

Ensuite, lors d'une étape de détermination 130, le module de détermination 60 détermine pour chaque instant t auquel les températures Tᵢₙₜ(t), Tₑₓₜ(t) ont été acquises lors de l'étape d'obtention 110, l'indicateur individuel I_{indiv}(t) propre à chaque dispositif. A cet effet, le module de détermination 60 détermine ces indicateurs individuels I_{indiv}(t) comme expliqué précédemment, et notamment en appliquant les équations 3 à 7.

Puis, lors d'une étape d'association 140, le module d'association 65 associe à chaque indicateur individuel I_{indiv}(t), un type de journée, par exemple en fonction d'une valeur moyenne d'une température dans un environnement du dispositif thermique 25. Ladite valeur moyenne est par exemple la température extérieure Tₑₓₜ moyenne pendant la journée à laquelle l'indicateur individuel I_{indiv}(t) est déterminé. La température extérieure moyenne Tₑₓₜ est par exemple calculée entre 7h et 15h et entre 18h et 20h, pour le dispositif thermique 25 en question.

Lors d'une étape de conversion 145, le module de conversion 70 calcule l'indicateur individuel de référence associé aux journées extrêmes en convertissant chaque puissance effaçable P_{eff} en la puissance effaçable extrême correspondante *P_{eff_{extrême}}*. Pour cela, le module de conversion 70 applique par exemple les équations 8 et 9.

Lors d'une étape de calcul 150, le module de calcul 75 calcule les quantiles Q_{I}(tₕ) d'indicateurs individuels I_{indiv}(t) à la pluralité de créneaux tₕ comme expliqué précédemment.

Lors d'une étape d'estimation 160, le module d'estimation 80 estime pour chaque créneau tₕ, l'indicateur collectif I_{col}(tₕ).

Pour cela, l'étape d'estimation 160 comprend préférentiellement une sous-étape de filtrage 162 lors de laquelle le module d'estimation 80 filtre les indicateurs individuels I_{indiv}(t) en fonction de la journée type qui leur est associée. Le module d'estimation 80 sélectionne, pour chaque créneau tₕ, uniquement les quantiles Qᵢ(tₕ) respectifs des indicateurs individuels I_{indiv}(t) associés au type de journée acquis pendant l'étape d'acquisition 120.

L'étape d'estimation 160 comprend en outre une sous-étape de sélection 164 et une troisième sous-étape de calcul 165, qui sont itérées le premier nombre de fois.

Lors de la sous-étape de sélection 164, le module d'estimation 80 sélectionne aléatoirement le deuxième nombre de quantiles Qᵢ(tₕ).

Lors de la troisième sous-étape de calcul 165, le module d'estimation 80 calcule la moyenne des quantiles Qᵢ(tₕ) sélectionnés.

L'étape d'estimation 160 comprend en outre une quatrième sous-étape de calcul 166, lors de laquelle le module d'estimation 80 ordonne, pour chaque créneau tₕ les moyennes des quantiles Qᵢ(tₕ) calculés. La distribution de quantiles Qᵢ(tₕ) forme alors, pour chaque créneau tₕ, la distribution de pourcentages %_{eff}(tₕ) de la puissance installée effaçable pour chaque créneau tₕ.

Lors de la quatrième sous-étape de calcul 166, le module d'estimation 80 calcule préférentiellement en outre le facteur de surdimensionnement *f*(*tₕ*), la quantité d'énergie effaçable *E_{effaçable}*(*tₕ*), et la capacité effaçable *P_{effaçable}*(*tₕ*), par exemple à l'aide des équations 10 à 12. L'indicateur collectif I_{col}(tₕ) comprend le pourcentage de la puissance installée propre à être économisée %_{eff}(tₕ), et préférentiellement le facteur de surdimensionnement *f*(*tₕ*), la quantité d'énergie effaçable *E_{effaçable}*(*tₕ*), et la capacité moyenne effaçable *P_{effaçable}*(*tₕ*).

Lors d'une étape d'affichage 170, le module d'affichage 85 affiche l'indicateur collectif I_{col}(tₕ) pour chaque créneau tₕ, par exemple sur l'afficheur 30.

En complément facultatif, lorsqu'un pourcentage de confiance est acquis lors de l'étape d'acquisition 120, le module d'affichage 85 n'affiche que le percentile correspondant au pourcentage de confiance dans la distribution de pourcentages %_{eff}(tₕ), et avantageusement les facteurs de surdimensionnement *f*(*tₕ*), quantités d'énergie effaçables *E_{effaçable}*(*tₕ*), et capacités moyennes effaçables *P_{effaçable}*(*tₕ*).

Lors d'une étape de pilotage 180, le module de pilotage 90 pilote la stratégie d'effacement comme décrit précédemment.

Avantageusement, le module d'acquisition est propre à afficher sur l'écran d'affichage 30 une fenêtre d'interface utilisateur présentant un champ permettant à un utilisateur de saisir la durée d'effacement souhaitée *Δt,* comme représenté sur la figure 2. Préférentiellement, la fenêtre d'interface présente des champs permettant aussi à l'utilisateur de saisir le nombre *nb_{device}* de dispositifs thermiques 25, le type de journée, l'écart maximal souhaité *ε_{M}* à la température de consigne T_{c}(t) et le pourcentage de confiance %*_{conf}.*

Selon une variante, le fenêtre d'interface utilisateur présente en outre un champ permettant à un utilisateur de saisir la puissance moyenne des dispositifs thermiques 25 considérés.

Ceci permet à un utilisateur de mettre en œuvre facilement l'étape d'acquisition 120 et donc de faire varier les paramètres d'entrée pour la mise en œuvre des étapes 130 à 170.

Selon une variante, chaque dispositif thermique 25 est par exemple un climatiseur, un ballon d'eau chaude, un chauffe-eau, un réfrigérateur, ou une pompe à chaleur. Préférentiellement, chaque dispositif thermique 25 est du même type. Autrement dit, chaque dispositif thermique 25 est un climatiseur, chaque dispositif thermique 25 est un ballon d'eau chaude, chaque dispositif 25 est un chauffe-eau, chaque dispositif 25 est un réfrigérateur, ou chaque dispositif 25 est une pompe à chaleur.

Le dispositif d'estimation 20 est analogue à celui présenté précédemment. Le fonctionnement du dispositif d'estimation 20 est analogue aux différences près listées ci-après.

Lorsque le dispositif thermique 25 est un climatiseur, la température intérieure Tᵢₙₜ(t) est supérieure à la température extérieure Tₑₓₜ(t). Le coefficient *α_{device}* est calculé de manière analogue mais quantifie le réchauffement du logement 15 par l'air à l'extérieur du logement 15.

Ainsi, l'équation 2 devient [MATH 13] ${T}_{int} \left(t\right) \leq {T}_{c} \left(t\right) + {ϵ}_{M}$ et l'équation 5 devient [MATH 14] ${T}_{int} \left(t+δt\right) - {T}_{c} = {ϵ}_{M}$

Lorsque le dispositif thermique 25 est un ballon d'eau chaude, un chauffe-eau ou une pompe à chaleur, le fluide est de l'eau à l'intérieur d'un réservoir du dispositif thermique 25. La température intérieure Tᵢₙₜ(t) est la température de l'eau dans le réservoir. La température extérieure Tₑₓₜ(t) est la température dans le logement 15.

Enfin, lorsque le dispositif thermique 25 est un réfrigérateur, le fluide est l'air dans une enceinte du réfrigérateur. La température intérieure Tᵢₙₜ(t) est la température dans le réfrigérateur. La température extérieure Tₑₓₜ(t) est la température dans le logement 15. Dans cet exemple la température intérieure Tᵢₙₜ(t) est plus faible que la température extérieure Tₑₓₜ(t). Ainsi, les équations 2 et 5 sont respectivement remplacées par les équations 13 et 14.

Ainsi, le procédé selon l'invention permet d'estimer le pourcentage %*_{eff}*(*tₕ*) de la puissance installée qui pourrait être économisé en appliquant une stratégie d'effacement. Cette information permet, en elle-même, de pallier le déséquilibre du réseau électrique lors des jours de pointe, sans avoir recours à des moyens de production thermiques très polluants et coûteux. Ainsi, l'invention permet de limiter la production de gaz à effet de serre tel que le dioxyde de carbone en rationalisant l'utilisation de dispositifs thermiques.

En complément facultatif, le modèle thermique comprend en outre, pour chaque dispositif thermique 25, un coefficient *β_{device}* de gain thermique associé au dispositif thermique 25 et qui sera décrit ci-après.

Le module d'obtention 50 est en outre configuré pour déterminer, pour chaque instant t de chaque séquence de pilotage, un coefficient *β*(*t*) instantané de gain thermique. Plus particulièrement, le module d'obtention 50 est configuré pour déterminer ce coefficient instantané *β*(*t*) à partir des températures Tᵢₙₜ(t), Tₑₓₜ(t) mesurées auxdits instants t, de la puissance de chaque dispositif thermique *P*(*t*), et à partir du pas de temps D entre deux instants t successifs. Le module d'obtention 50 est par exemple configuré pour appliquer l'équation suivante. [MATH 15] $β \left(t\right) = \frac{1}{P \left(t\right)} ∗ \left(\frac{{T}_{int} \left(t+D\right) - {T}_{int} \left(t\right)}{{α}_{device} ∗ D}-\left({T}_{ext \left(t\right)}-{T}_{int \left(t\right)}\right)\right)$

Le coefficient instantané de gain *β*(*t*) représente la variation de température Tᵢₙₜ(t+D) à l'intérieur du logement 15 pendant la durée D en fonction de la différence de température entre l'intérieur Tᵢₙₜ(t) et l'extérieur Tₑₓₜ(t) du logement 15, lors d'une séquence de pilotage.

Le module d'obtention 50 est en outre configuré pour calculer, pour chaque séquence de pilotage, un coefficient *β_{sequence}* de gain thermique de séquence. Le module d'obtention 50 est par exemple configuré pour calculer le coefficient de séquence *β_{sequence}* à partir des coefficients instantanés *β*(*t*) de la séquence de pilotage correspondante. En particulier, le module d'obtention 50 est configuré pour calculer, pour chaque séquence de pilotage, le coefficient de séquence *β_{sequence}* comme étant la médiane des coefficients instantanés *β*(*t*) durant ladite séquence de pilotage.

Le module d'obtention 50 est en outre configuré pour calculer, pour chaque dispositif thermique 25, un coefficient *β_{device}* de gain thermique de dispositif 25. Par exemple, le module d'obtention 50 est configuré pour calculer le coefficient *β_{device}* du dispositif 25 comme étant la médiane des coefficients *β_{sequence}* des séquences de pilotage.

On comprend alors que le coefficient de gain thermique de dispositif *β_{device}* représente la variation médiane de température intérieure Tᵢₙₜ(t) par unité de temps et en fonction de la température extérieure Tₑₓₜ(t), de la puissance P(t) et du coefficient de déperdition thermique *α_{device},* lorsque le dispositif thermique 25 pilote ladite température intérieure Tᵢₙₜ(t).

En outre, selon ce complément facultatif, le module de détermination 60 détermine en outre une durée individuelle *ρ_{indiv}* de retour à l'équilibre suite à un effacement. A cet effet, le module de détermination 60 est configuré pour déterminer la durée individuelle *ρ_{indiv}* à partir du coefficient de déperdition thermique de dispositif *α_{device},* du coefficient de gain thermique de dispositif *β_{device},* de la puissance du dispositif *P_{inst_{device}},* et d'une température estimée à la fin de l'effacement *T_{int_{effacement}}*(*t_{end_{eff}}*), où *t_{end_{eff}}* désigne l'instant final de l'effacement.

On comprend que l'instant final de l'effacement *t_{end_{eff}}* est :
- soit égal à l'instant *t* pour lequel la température intérieure *Tᵢₙₜ*(*t_{end_{eff}}*) a atteint la valeur *T_{c} - ε_{M},* la température estimée à la fin de l'effacement *T_{int_{effacement}}*(*t_{end_{eff}}*) étant alors égale à *T_{c} - ε_{M},*
- soit égal à la somme entre l'instant t et la durée d'effacement souhaité Δt, la température estimée à la fin de l'effacement *T_{int_{effacement}}*(*t_{end_{eff}}*) étant alors égale à Tᵢₙₜ(t) *+ α*_{*device* *} Δ*t _{*}* (*Tₑₓₜ*(*t*) *- Tᵢₙₜ*(*t*)) d'après l'équation [MATH 4].

Le module de détermination 60 est par exemple configuré pour calculer, pour chaque dispositif 25 et pour chaque instant *t,* l'évolution de la température intérieure *Tᵢₙₜ*, à une pluralité de pas *D* successifs depuis l'instant final de l'effacement *t_{end_{eff}}* selon l'équation suivante. [MATH 16] $\begin{matrix}{T}_{int} \left({t}_{{end}_{eff}}+D\right) \\ = D ∗ {α}_{device} ∗ \left({β}_{device}∗{P}_{{inst}_{device}}+\left({T}_{ext}\left({t}_{{end}_{eff}}\right)-{T}_{int}\left({t}_{{end}_{eff}}\right)\right)\right. \\ + {T}_{int} \left({t}_{{end}_{eff}}\right)\end{matrix}$

Le module de détermination 60 est configuré pour déterminer la durée individuelle de retour à l'équilibre *ρ_{indiv}* comme étant la durée *n* _{*} *D* au bout de laquelle la température intérieure Tᵢₙₜ (*t_{end_{eff}}* + *n* _{*} *D*) devient proche de la température de consigne *T_{c}*(*t_{end_{eff}} + n* _{*} *D*) à une précision *εₐ*. C'est-à-dire la durée individuelle *ρ_{indiv}* = *n _{*} D* pour laquelle la condition suivante est vérifiée : ${T}_{int} \left({t}_{{end}_{eff}}+n∗D\right) \geq {T}_{c} \left({t}_{{en}_{eff}}+n∗D\right) - {ϵ}_{a}$

La précision *εₐ* est par exemple égale à 0.1°C.

On comprend donc que la durée individuelle *ρ_{indiv}* de retour à l'équilibre calculée pour une dispositif 25 et un *t* correspond à la durée de retour à l'équilibre lorsqu'un effacement a été réalisé à l'instant *t*.

Selon ce complément facultatif, le module d'association 65 est configuré pour associer, à chaque durée individuelle *ρ_{indiv}* un type de journée parmi les types de journée précités.

Selon ce complément facultatif, le module de calcul 75 est configuré pour calculer, à partir de toutes les durées individuelles déterminées *ρ_{indv},* et pour chaque type de journée, des quantiles *Q_{ρ_{idiv}}*(*tₕ*) de durée individuelle *ρ_{indiv}* de manière analogue aux quantiles Q_{I}(tₕ) d'indicateurs individuels I_{indiv}.

Selon ce complément facultatif, le module d'estimation 80 est configuré pour ensuite effectuer, à partir des quantiles *Q_{ρ_{idiv}}*(*tₕ*) de durée individuelle *ρ_{indiv}*, les mêmes actions que celles définies précédemment à partir des quantiles Q_{I}(tₕ) d'indicateurs individuels I_{indiv}, pour estimer des percentiles des quantiles *Q_{ρ_{indiv}}*(*tₕ*) ordonnés pour chaque créneau Perc(*ρ*(tₕ)).

Selon ce complément facultatif, de manière non représentée, le module d'affichage 85 est configuré pour afficher, par exemple sur l'afficheur 30, en outre, les percentiles Perc(*ρ*(tₕ)) des quantiles *Q_{ρ_{indiv}}*(*tₕ*) de durée de retour à l'équilibre.

Selon ce complément facultatif et de manière optionnelle, le module de pilotage 90 est configuré pour envoyer une instruction d'arrêt du pilotage de la température intérieure Tᵢₙₜ(t) au(x) dispositif(s) thermique(s) 25 en fonction de l'effacement souhaité, uniquement pour les créneaux pour lesquels les percentiles Perc(*ρ*(tₕ)) des quantiles *Q_{ρ_{indiv}}*(*tₕ*) de durée de retour à l'équilibre sont inférieurs à un seuil prédéfini.

Selon ce complément facultatif, en fonctionnement, le procédé est modifié comme suit.

Lors de l'étape d'obtention 110, le modèle thermique obtenu par le module d'obtention comprend en outre le coefficient *β_{device}* de chaque dispositif 25 comme expliqué précédemment. Pour cela, préférentiellement, lors de la sous-étape 112, la puissance instantanée *P*(*t*) de chaque dispositif 25 est mesurée à chaque instant t.

Lors de l'étape de détermination 130, le module de détermination 60 détermine en outre chaque durée individuelle de retour à l'équilibre *ρ_{indiv}*, comme expliqué précédemment.

Lors de l'étape d'association 140, le module d'association 65 associe à chaque durée individuelle *ρ_{indiv}*, un type de journée.

Lors de l'étape de calcul 150, le module de calcul 75 calcule chaque quantile *Q_{ρ_{indiv}}*(*tₕ*) de durée de retour à l'équilibre.

Lors de l'étape d'estimation 160, le module d'estimation 80 estime les percentiles Perc(*ρ*(tₕ)) des quantiles *Q_{ρ_{indiv}}*(*tₕ*) de durée de retour à l'équilibre similairement aux percentiles des quantiles d'indicateurs individuels.

Lors de l'étape d'affichage 170, le module d'affichage 85 affiche en outre les percentiles Perc(*ρ*(tₕ)) des quantiles *Q_{ρ_{indiv}}*(*tₕ*) de durée de retour à l'équilibre.

Optionnellement, lors de l'étape de pilotage 180, le module de pilotage 90 envoie une instruction d'arrêt du pilotage de la température intérieure Tᵢₙₜ(t) au(x) dispositif(s) thermique(s) 25 en fonction de l'effacement souhaité, uniquement pour les créneaux pour lesquelles les percentiles Perc(*ρ*(tₕ)) des quantiles *Q_{ρ_{indiv}}*(*tₕ*) de durée de retour à l'équilibre sont inférieurs à un seuil prédéfini.

L'évaluation du temps de retour à l'équilibre permet de mieux rendre compte des conséquences d'un effacement sur les dispositifs thermiques et leur environnement.

## Revendications

1. Procédé d'estimation d'un indicateur collectif (I_{col}(tₕ)) de réduction de consommation énergétique pour un ensemble de dispositifs thermiques (25), chaque dispositif thermique (25) étant propre à piloter une température d'un fluide dans un logement (15), le procédé étant mis en oeuvre par un dispositif électronique d'estimation (20), le procédé comprenant les étapes suivantes :
- obtention (110) d'un modèle thermique (*α_{device}, β_{device}*) de chaque dispositif thermique (25),
- acquisition (120) d'une durée d'effacement souhaitée (Δ*t*),
- détermination (130), pour chaque dispositif thermique (25), d'un indicateur individuel (I_{indiv}(t)) de potentiel de réduction de consommation pour une pluralité d'instants successifs (t) à partir du modèle thermique (*α_{device}*, *β_{device}*), et de la durée d'effacement souhaitée (Δ*t*),
chaque indicateur individuel (I_{indiv}(t)) étant représentatif de l'énergie propre à être économisée par ledit dispositif thermique (25) pendant une durée inférieure ou égale à la durée d'effacement souhaitée (Δ*t*), et
- pour une pluralité de créneaux (tₕ), estimation (160) de l'indicateur collectif (I_{col}(tₕ)) de réduction de consommation énergétique à partir des indicateurs individuels (I_{indiv}(t)).

2. Procédé selon la revendication 1, dans lequel l'indicateur collectif (I_{col}(tₕ)) de réduction de consommation énergétique comprend un pourcentage de puissance installée (%_{eff}(tₕ)) de l'ensemble des dispositifs thermiques (25) propre à être économisée lors d'un créneau (tₕ), dit pourcentage de puissance installée effaçable.

3. Procédé selon la revendication 2, dans lequel l'étape d'acquisition (120) comprend en outre l'acquisition d'un nombre (*nb_{device}*) de dispositifs thermiques (25) installés,
l'indicateur collectif (I_{col}(tₕ)) comprenant en outre, pour chaque créneau (tₕ), la quantité d'énergie propre à être économisée (*E_{effaçable}*(*tₕ*)), ladite quantité (*E_{effaçable}*(*tₕ*)) étant calculée à partir du nombre (*nb_{device}*) de dispositifs thermiques (25) installés, du pourcentage de puissance installée effaçable (%*_{eff}*(*tₕ*)) et d'une puissance installée moyenne (*Pinst_{device}*) des dispositifs thermiques (25).

4. Procédé selon l'une quelconque des revendications précédentes, dans lequel le dispositif électronique d'estimation (20) est propre à recevoir des données de température (Tᵢₙₜ(t), Tₑₓₜ(t), T_{c}(t)) et de puissance (P(t)) provenant des dispositifs thermiques (25), et dans lequel,
lors de l'étape d'obtention (110), le modèle thermique (*α_{device}*) est déterminé à partir des données de température provenant des dispositifs thermiques (25).

5. Procédé selon la revendication précédente, dans lequel l'étape (110) d'obtention du modèle thermique (*α_{device}, β_{device}*) comprend, pour chaque dispositif thermique (25), les sous-étapes suivantes :
- mesure (112) de température(s) (Tᵢₙₜ(t), Tₑₓₜ(t), T_{c}(t)) et de puissance (P(t)), par le dispositif thermique (25), à différents instants successifs (t), la pluralité d'instants (t) formant des séquences de pilotage pendant lesquels le dispositif thermique (25) pilote la température du fluide et des séquences de repos pendant lesquels aucun pilotage de la température n'est effectué,
- pour chaque instant (t) de chaque séquence de repos, détermination (114) d'un coefficient instantané de déperdition thermique (*α*(*t*)) à partir de la ou des températures (Tᵢₙₜ(t), Tₑₓₜ(t)) mesurées par le dispositif thermique (25) audit instant (t), et à partir d'une durée (D) entre deux instants successifs (t),
- pour chaque séquence de repos, calcul (116) d'un coefficient de déperdition thermique de séquence (*α_{sequence}*) à partir des coefficients instantanés de déperdition thermique (*α*(*t*)) de la séquence de repos,
- calcul (118) d'un coefficient de déperdition thermique de dispositif (*α_{device}*) *à* partir des coefficients de déperdition thermique de séquence (*α_{sequence}*) de chaque séquence respectant les contraintes suivantes :
o une durée de la séquence de repos est supérieure à un premier seuil prédéfini, et
o une température (Tₑₓₜ(t)) dans un environnement du dispositif thermique (25) respecte une contrainte prédéfinie,
le modèle (*α_{device}, β_{device}*) comprenant chaque coefficient de déperdition thermique de dispositif (*α_{device}*).

6. Procédé selon l'une quelconque des revendications précédentes, dans lequel l'étape d'acquisition (120) comprend en outre l'acquisition d'un écart maximal souhaité (*ε_{M}*) à une température de consigne (T_{c}(t)) propre à chaque dispositif thermique (25),
lors de l'étape de détermination (130), chaque indicateur individuel (I_{indiv}(t)) étant déterminé en fonction de la température de consigne (T_{c}(t)) propre au dispositif thermique (25) et de l'écart maximal (*ε_{M}*)*.*

7. Procédé selon les revendications 5 et 6, dans lequel chaque indicateur individuel (I_{indiv}(t)) est déterminé en outre à partir du coefficient (*α_{device}*) de déperdition thermique associé à chaque dispositif thermique (25),
chaque indicateur individuel (I_{indiv}(t)) dépendant de l'énergie propre à être économisée en désactivant le dispositif sans qu'une température (Tᵢₙₜ(t)) propre au dispositif thermique (25) ne s'éloigne de la température de consigne (T_{c}(t)) de plus de l'écart maximal (*ε_{M}*) à la température de consigne (T_{c}(t)).

8. Procédé selon la revendication précédente, comprenant en outre, entre les étapes de détermination (130) et d'estimation (160), une étape de calcul (150) lors de laquelle, une pluralité de quantiles (Qᵢ(tₕ)) d'indicateurs individuels (I_{indiv}(t)) sont calculés à une pluralité de créneaux (tₕ),
l'étape d'estimation (160) comprenant les sous étapes suivantes qui sont itérées un premier nombre de fois :
- pour chaque créneau, sélection (164) aléatoire d'un deuxième nombre de quantiles (Qᵢ(tₕ)),
- calcul (165) d'une moyenne des quantiles (Qᵢ(tₕ)) sélectionnés,
l'indicateur collectif (I_{col}(tₕ)) de réduction de consommation énergétique comprenant, pour chaque créneau, les moyennes des quantiles (Qᵢ(tₕ)) calculées.

9. Procédé selon la revendication précédente, dans lequel l'étape d'acquisition (120) comprend en outre l'acquisition d'un pourcentage de confiance souhaité (%*_{conf}*),
l'indicateur collectif (I_{col}(tₕ)) de réduction de consommation énergétique comprenant, pour chaque créneau (tₕ), le percentile des moyennes des quantiles (Qᵢ(tₕ)), calculées selon le pourcentage de confiance souhaité (%*_{conf}*).

10. Procédé selon la revendication 9, dans lequel l'étape d'acquisition (120) comprend en outre l'acquisition d'un type de journée choisi parmi une pluralité de types de journée,
l'étape d'estimation (160) comprenant une sous-étape de filtrage (162) de quantiles (Qᵢ(tₕ)) d'indicateurs individuels en fonction de la journée type qui leur est associée, l'indicateur collectif (I_{col}(tₕ)) étant estimé uniquement à partir des quantiles (Qᵢ(tₕ)) d'indicateurs individuels associés à un type de journée correspondant au type de journée reçu.

11. Procédé selon l'une quelconque des revendications précédentes, dans lequel le procédé comprend, entre l'étape de détermination (130) et l'étape d'estimation (160), une étape d'association (140) à chaque indicateur individuel (I_{indiv}(t)) de potentiel réduction de consommation, d'un type de journée en fonction d'une valeur moyenne d'une température (Tₑₓₜ(t)) dans un environnement du dispositif thermique (25) associé lors de la détermination (140) de l'indicateur individuel (I_{indiv}(t)).

12. Procédé selon l'une quelconque des revendications précédentes, dans lequel chaque dispositif thermique (25) est d'un type choisi dans le groupe consistant en :
- un radiateur,
- un climatiseur,
- un ballon d'eau chaude,
- un chauffe-eau,
- un réfrigérateur, et
- une pompe à chaleur,
chaque dispositif thermique (25) étant de préférence du même type.

13. Procédé selon l'une quelconque des revendications précédentes, dans lequel le procédé comprend en outre une étape (170) d'affichage de l'indicateur collectif sur un afficheur (30) du dispositif électronique d'estimation (20).

14. Procédé selon l'une quelconque des revendications précédentes, dans lequel, lors de l'étape d'obtention (110) le modèle thermique (*α_{device}, β_{device}*) comprend en outre un coefficient de gain thermique (*β_{device}*) obtenu pour chaque dispositif (25),
lors de l'étape de détermination (130), une durée individuelle (*ρ_{indiv}*) de retour à un équilibre thermique après un effacement est déterminée pour chaque dispositif (25) et pour chaque instant (t).

15. Procédé selon la revendication précédente, dans lequel l'étape (110) d'obtention du modèle thermique (*α_{device,} β_{device}*) comprend, pour chaque dispositif thermique (25), les sous-étapes suivantes :
- mesure (112) de température(s) (Tᵢₙₜ(t), Tₑₓₜ(t), T_{c}(t)) et de puissance (P(t)), par le dispositif thermique (25), à différents instants successifs (t), la pluralité d'instants (t) formant des séquences de pilotage pendant lesquels le dispositif thermique (25) pilote la température du fluide et des séquences de repos pendant lesquels aucun pilotage de la température n'est effectué,
- pour chaque instant (t) de chaque séquence de pilotage, détermination (114) d'un coefficient instantané de gain thermique (*β*(*t*)) à partir de la ou des températures (Tᵢₙₜ(t), Tₑₓₜ(t)) mesurées par le dispositif thermique (25) audit instant (t), à partir de la puissance (*P*(*t*)), et à partir d'une durée (D) entre deux instants successifs (t),
- pour chaque séquence de pilotage, calcul (116) d'un coefficient de gain thermique de séquence (*β_{sequence}*) à partir des coefficients instantanés de gain thermique (*β*(*t*)) de la séquence de pilotage,
- calcul (118) d'un coefficient de gain thermique de dispositif (*β_{device}*) à partir des coefficients de gain thermique de séquence (*β_{sequence}*) de chaque séquence de pilotage
le modèle (*α_{device}, β_{device}*) comprenant chaque coefficient de gain thermique de dispositif (*β_{device}*).

16. Produit programme d'ordinateur comprenant des instructions logicielles qui, lorsqu'elles sont exécutées par un ordinateur, mettent en oeuvre le procédé d'estimation selon l'une quelconque des revendications précédentes.

17. Dispositif (20) d'estimation d'un indicateur collectif (I_{col}(tₕ)) de réduction de consommation énergétique pour un ensemble de dispositifs thermiques (25), chaque dispositif thermique (25) étant propre à piloter une température d'un fluide dans un logement (15), le dispositif d'estimation (20) comprenant :
- un module d'obtention (50) configuré pour obtenir un modèle thermique (*α_{device}*) de chaque dispositif thermique (25),
- un module d'acquisition (55) configuré pour acquérir une durée d'effacement souhaitée (Δ*t*),
- un module de détermination (60) configuré pour déterminer, pour chaque dispositif thermique (25), un indicateur individuel (I_{indiv}(t)) de potentiel de réduction de consommation pour une pluralité d'instants successifs (t) à partir du modèle thermique (*α_{device}*), et de la durée d'effacement souhaitée (Δ*t*), chaque indicateur individuel (I_{indiv}(t)) étant représentatif de l'énergie propre à être économisée par ledit dispositif thermique (25) pendant une durée inférieure ou égale à la durée d'effacement souhaitée (Δ*t*), et
- un module d'estimation (80) configuré pour estimer, pour une pluralité de créneaux (tₕ), l'indicateur collectif (I_{col}(tₕ)) de réduction de consommation énergétique à partir des indicateurs individuels (I_{indiv}(t)).

18. Dispositif (20) selon la revendication 17, dans lequel le module d'acquisition (55) est configuré pour acquérir en outre un écart maximal (*ε_{M}*) souhaité à une température de consigne (T_{c}(t)),
le module de détermination (60) étant configuré pour déterminer l'indicateur individuel (I_{indiv}(t)) de potentiel de réduction de consommation en outre à partir de l'écart maximal souhaité (*ε_{M}*)*.*

## Patentansprüche

1. Verfahren zur Schätzung eines kollektiven Indikators (I_{col}(tₕ)) zur Reduzierung des Energieverbrauchs für eine Gesamtheit thermischer Vorrichtungen (25), wobei jede thermische Vorrichtung (25) geeignet ist, eine Temperatur eines Fluids in einer Wohnung (15) zu steuern, wobei das Verfahren durch eine elektronische Schätzungsvorrichtung (20) durchgeführt wird, wobei das Verfahren die folgenden Schritte umfasst:
- Erhalten (110) eines thermischen Modells (*α_{device}, β_{device}*) jeder thermischen Vorrichtung (25),
- Erfassung (120) einer gewünschten Abschaltdauer (Δ*t*),
- Bestimmung (130), für jede thermische Vorrichtung (25), eines individuellen Indikators (I_{indiv}(t)) eines Potenzials zur Verbrauchsreduzierung für eine Vielzahl aufeinanderfolgender Zeitpunkte (t) ausgehend von dem thermischen Modell (*α_{device}, β_{device}*)*,* und von der gewünschten Abschaltdauer (Δ*t*),
wobei jeder individuelle Indikator (I_{indiv}(t)) repräsentativ für die Energie ist, die geeignet ist, durch die genannte thermische Vorrichtung (25) während einer Dauer, die kleiner als oder gleich der gewünschten Abschaltdauer (Δ*t*) ist, eingespart zu werden, und
- für eine Vielzahl von Zeitfenstern (tₕ), Schätzung (160) des kollektiven Indikators (I_{col}(tₕ)) zur Verbrauchsreduzierung von Energie ausgehend von den individuellen Indikatoren (I_{indiv}(t)).

2. Verfahren nach Anspruch 1, in dem der kollektive Indikator (I_{col}(tₕ)) zur Verbrauchsreduzierung von Energie einen Prozentsatz installierter Leistung (%_{eff}(tₕ)) der Gesamtheit der thermischen Vorrichtungen (25) umfasst, der geeignet ist, bei einem Zeitfenster (tₕ) eingespart zu werden, genannt Prozentsatz abschaltbarer installierter Leistung.

3. Verfahren nach Anspruch 2, in dem der Schritt der Erfassung (120) außerdem die Erfassung einer Anzahl (*nb_{device}*) installierter thermischer Vorrichtungen (25) umfasst,
wobei der kollektive Indikator (I_{col}(tₕ)) außerdem, für jedes Zeitfenster (tₕ), die Energiemenge, die geeignet ist, eingespart zu werden (*E_{effaçable}*(*tₕ*)), umfasst, wobei die genannte Menge (*E_{effaçable}*(*tₕ*)) ausgehend von der Anzahl (*nb_{device}*) installierter thermischer Vorrichtungen (25), dem Prozentsatz abschaltbarer installierter Leistung (%_{eff}(tₕ)) und einer mittleren installierten Leistung (*Pinst_{device})* der thermischen Vorrichtungen (25) berechnet wird.

4. Verfahren nach einem beliebigen der vorhergehenden Ansprüche, in dem die elektronische Schätzungsvorrichtung (20) geeignet ist, Temperaturdaten (Tᵢₙₜ(t), Tₑₓₜ(t), T_{c}(t)) und Leistungsdaten (P(t)) zu empfangen, die von den thermischen Vorrichtungen (25) stammen, und in dem,
während des Schritts des Erhaltens (110) das thermische Modell (*α_{device}*) ausgehend von den Temperaturdaten bestimmt wird, die von den thermischen Vorrichtungen (25) stammen.

5. Verfahren nach dem vorhergehenden Anspruch, in dem der Schritt (110) des Erhaltens des thermischen Modells (*α_{device}, β_{device}*) für jede thermische Vorrichtung (25) die folgenden Unterschritte umfasst:
- Messung (112) von Temperatur(en) (Tᵢₙₜ(t), Tₑₓₜ(t), T_{c}(t)) und von Leistung (P(t)), durch die thermische Vorrichtung (25), zu verschiedenen aufeinanderfolgenden Zeitpunkten (t), wobei die Vielzahl von Zeitpunkten (t) Steuersequenzen bildet, während denen die thermische Vorrichtung (25) die Temperatur des Fluids steuert, und Ruhesequenzen bildet, während deren keine Steuerung der Temperatur durchgeführt wird,
- für jeden Zeitpunkt (t) jeder Ruhesequenz, Bestimmung (114) eines momentanen Koeffizienten für Wärmeverlust (*α*(*t*)) ausgehend von der oder den Temperaturen (Tᵢₙₜ(t), Tₑₓₜ(t)), die durch die thermische Vorrichtung (25) zu dem genannten Zeitpunkt (t) gemessen werden, und ausgehend von einer Dauer (D) zwischen zwei aufeinanderfolgenden Zeitpunkten (t),
- für jede Ruhesequenz, Berechnung (116) eines Koeffizienten für Wärmeverlust der Sequenz (*α_{sequence}*) ausgehend von den momentanen Koeffizienten für Wärmeverlust (*α*(*t*)) der Ruhesequenz,
- Berechnung (118) eines Koeffizienten für Wärmeverlust der Vorrichtung (*α_{device}*) ausgehend von den Koeffizienten für Wärmeverlust der Sequenz (*α_{sequence}*) jeder Sequenz, die die folgenden Bedingungen einhält:
∘ eine Dauer der Ruhesequenz ist größer als ein erster vordefinierter Schwellenwert, und
∘ eine Temperatur (Tₑₓₜ(t)) in einer Umgebung der thermischen Vorrichtung (25) eine vordefinierte Bedingung erfüllt,
wobei das Modell (*α_{device}, β_{device}*) jeden Koeffizienten für Wärmeverlust der Vorrichtung (*α_{device}*) umfasst.

6. Verfahren nach einem beliebigen der vorhergehenden Ansprüche, in dem der Schritt der Erfassung (120) außerdem die Erfassung einer gewünschten maximalen Abweichung (*ε_{M}*) von einer Solltemperatur (T_{c}(t)) umfasst, die jeder thermischen Vorrichtung (25) eigen ist,
wobei während des Schritts der Bestimmung (130) jeder individuelle Indikator (I_{indiv}(t)) in Abhängigkeit von der Solltemperatur (T_{c}(t)), die der thermischen Vorrichtung (25) eigen ist, und von der maximalen Abweichung (*ε_{M}*) bestimmt wird.

7. Verfahren nach den Ansprüchen 5 und 6, in dem jeder individuelle Indikator (I_{indiv}(t)) außerdem ausgehend von dem Koeffizienten (*α_{device}*) für Wärmeverlust bestimmt wird, der jeder thermischen Vorrichtung (25) zugeordnet ist,
wobei jeder individuelle Indikator (I_{indiv}(t)) von der Energie abhängt, die geeignet ist, eingespart zu werden, indem die Vorrichtung deaktiviert wird, ohne dass sich eine Temperatur (Tᵢₙₜ(t)), die der thermischen Vorrichtung (25) eigen ist, von der Solltemperatur (T_{c}(t)) um mehr als die maximale Abweichung (*ε_{M}*) von der Solltemperatur (T_{c}(t)) entfernt.

8. Verfahren nach dem vorhergehenden Anspruch, außerdem umfassend, zwischen den Schritten der Bestimmung (130) und der Schätzung (160), einen Berechnungsschritt (150), während dessen eine Vielzahl von Quantilen (Qᵢ(tₕ)) individueller Indikatoren (I_{indiv}(t)) zu einer Vielzahl von Zeitfenstern (tₕ) berechnet werden,
wobei der Schritt der Schätzung (160) die folgenden Unterschritte umfasst, die eine erste Anzahl von Malen iteriert werden:
- für jedes Zeitfenster, zufälliges Auswählen (164) einer zweiten Anzahl von Quantilen (Qᵢ(tₕ)),
- Berechnung (165) eines Mittelwerts der ausgewählten Quantile (Qᵢ(tₕ)),
wobei der kollektive Indikator (I_{col}(tₕ)) zur Verbrauchsreduzierung von Energie, für jedes Zeitfenster, die berechneten Mittelwerte der Quantile (Qᵢ(tₕ)) umfasst.

9. Verfahren nach dem vorhergehenden Anspruch, in dem der Schritt der Erfassung (120) außerdem die Erfassung eines gewünschten Konfidenzprozentsatzes (%*_{conf}*) umfasst,
wobei der kollektive Indikator (I_{col}(tₕ)) zur Verbrauchsreduzierung von Energie, für jedes Zeitfenster (tₕ), das Perzentil der Mittelwerte der Quantile (Qᵢ(tₕ)) umfasst, berechnet gemäß dem gewünschten Konfidenzprozentsatz (%*_{conf}*).

10. Verfahren nach Anspruch 9, in dem der Schritt der Erfassung (120) außerdem die Erfassung eines Tagestyps umfasst, der aus einer Vielzahl von Tagestypen ausgewählt ist,
der Schritt der Schätzung (160) umfassend einen Teilschritt des Filterns (162) von Quantilen (Qᵢ(tₕ)) individueller Indikatoren in Abhängigkeit von dem Typtag, der ihnen zugeordnet ist, wobei der kollektive Indikator (I_{col}(tₕ)) ausschließlich ausgehend von den Quantilen (Qᵢ(tₕ)) individueller Indikatoren geschätzt wird, die einer Tagesart zugeordnet sind, die der empfangenen Tagesart entspricht.

11. Verfahren nach einem beliebigen der vorhergehenden Ansprüche, in dem das Verfahren zwischen dem Schritt der Bestimmung (130) und dem Schritt der Schätzung (160) einen Schritt der Zuordnung (140) einer Tagesart zu jedem individuellen Indikator (I_{indiv}(t)) des Potenzials der Verbrauchsreduzierung in Abhängigkeit von einem Mittelwert einer Temperatur (Tₑₓₜ(t)) in einer Umgebung der zugeordneten thermischen Vorrichtung (25) bei der Bestimmung (140) des individuellen Indikators (I_{indiv}(t)) umfasst.

12. Verfahren nach einem beliebigen der vorhergehenden Ansprüche, in dem jede thermische Vorrichtung (25) von einem Typ ist, der aus der Gruppe ausgewählt ist, bestehend aus:
- einem Heizkörper,
- einem Klimagerät,
- einem Warmwasserspeicher,
- einem Warmwasserbereiter,
- einem Kühlschrank, und
- einer Wärmepumpe,
wobei jede thermische Vorrichtung (25) vorzugsweise vom selben Typ ist.

13. Verfahren nach einem beliebigen der vorhergehenden Ansprüche, in dem das Verfahren außerdem einen Schritt (170) der Anzeige des kollektiven Indikators auf einer Anzeige (30) der elektronischen Schätzungsvorrichtung (20) umfasst.

14. Verfahren nach einem beliebigen der vorhergehenden Ansprüche, in dem, bei dem Schritt des Erhaltens (110), das thermische Modell (*α_{device}, β_{device}*) außerdem einen Koeffizienten für thermischen Gewinn (*β_{device}*) umfasst, der für jede Vorrichtung (25) erhalten wird,
während des Schritts der Bestimmung (130) eine individuelle Dauer (*ρ_{indiv}*) der Rückkehr zu einem thermischen Gleichgewicht nach einer Abschaltung für jede Vorrichtung (25) und für jeden Zeitpunkt (t) bestimmt wird.

15. Verfahren nach dem vorhergehenden Anspruch, in dem der Schritt (110) des Erhaltens des thermischen Modells (*α_{device}, β_{device}*) für jede thermische Vorrichtung (25) die folgenden Teilschritte umfasst:
- Messung (112) von Temperatur(en) (Tᵢₙₜ(t), Tₑₓₜ(t), T_{c}(t)) und von Leistung (P(t)), durch die thermische Vorrichtung (25), zu verschiedenen aufeinanderfolgenden Zeitpunkten (t), wobei die Vielzahl von Zeitpunkten (t) Steuersequenzen bildet, während derer die thermische Vorrichtung (25) die Temperatur des Fluids steuert, und Ruhesequenzen, während derer keine Steuerung der Temperatur durchgeführt wird,
- für jeden Zeitpunkt (t) jeder Steuersequenz, Bestimmung (114) eines momentanen Koeffizienten für thermischen Gewinn (*β*(*t*)) ausgehend von der oder den Temperaturen (Tᵢₙₜ(t), Tₑₓₜ(t)), die durch die thermische Vorrichtung (25) zu dem genannten Zeitpunkt (t) gemessen werden, ausgehend von der Leistung (*P*(*t*)), und ausgehend von einer Dauer (D) zwischen zwei aufeinanderfolgenden Zeitpunkten (t),
- für jede Steuersequenz, Berechnung (116) eines Koeffizienten für thermischen Gewinn einer Sequenz (*β_{sequence}*) ausgehend von den momentanen Koeffizienten für thermischen Gewinn (*β*(*t*)) der Steuersequenz,
- Berechnung (118) eines Koeffizienten für thermischen Gewinn einer Vorrichtung (*β_{device}*) ausgehend von den Koeffizienten für thermischen Gewinn einer Sequenz (*β_{sequence}*) jeder Steuersequenz,
wobei das Modell (*α_{device}, β_{device}*) jeden Koeffizienten für thermischen Gewinn einer Vorrichtung (*β_{device}*) umfasst.

16. Computerprogrammprodukt, umfassend Softwareanweisungen, die, wenn sie von einem Computer ausgeführt werden, das Verfahren zur Schätzung nach einem beliebigen der vorhergehenden Ansprüche ausführen.

17. Vorrichtung (20) zur Schätzung eines kollektiven Indikators (I_{col}(tₕ)) zur Reduzierung des Energieverbrauchs für eine Gesamtheit von thermischen Vorrichtungen (25), wobei jede thermische Vorrichtung (25) geeignet ist, eine Temperatur eines Fluids in einer Wohnung (15) zu steuern, wobei die Schätzungsvorrichtung (20) umfasst:
- ein Erhaltungsmodul (50), das konfiguriert ist, um ein thermisches Modell (*α_{device}*) jeder thermischen Vorrichtung (25) zu erhalten,
- ein Erfassungsmodul (55), das konfiguriert ist, um eine gewünschte Abschaltdauer (Δ*t*) zu erfassen,
- ein Bestimmungsmodul (60), das konfiguriert ist, um für jede thermische Vorrichtung (25) einen individuellen Indikator (I_{indiv}(t)) des Potenzials zur Verbrauchsreduzierung für eine Vielzahl aufeinanderfolgender Zeitpunkte (t) ausgehend von dem thermischen Modell (*α_{device}*), und von der gewünschten Abschaltdauer (Δ*t*) zu bestimmen,
wobei jeder individuelle Indikator (I_{indiv}(t)) repräsentativ für die Energie ist, die geeignet ist, durch die genannte thermische Vorrichtung (25) während einer Dauer eingespart zu werden, die kleiner als oder gleich der gewünschten Abschaltdauer (Δ*t*) ist, und
- ein Schätzungsmodul (80), das konfiguriert ist, um für eine Vielzahl von Zeitfenstern (tₕ) den kollektiven Indikator (I_{col}(tₕ)) der Reduzierung des Energieverbrauchs ausgehend von den individuellen Indikatoren (I_{indiv}(t)) zu schätzen.

18. Vorrichtung (20) nach Anspruch 17, in dem das Erfassungsmodul (55) konfiguriert ist, um außerdem eine gewünschte maximale Abweichung (*ε_{M}*) von einer Solltemperatur (T_{c}(t)) zu erfassen,
wobei das Bestimmungsmodul (60) konfiguriert ist, um den individuellen Indikator (I_{indiv}(t)) des Potenzials zur Verbrauchsreduzierung außerdem ausgehend von der gewünschten maximalen Abweichung (*ε_{M}*) zu bestimmen.

## Claims

1. Method of estimation of a collective indicator (I_{col}(tₕ)) of energy consumption reduction for a set of thermal devices (25), each thermal device (25) being suitable for controlling a temperature of a fluid in a dwelling (15), the method being implemented by an electronic estimation device (20), the method comprising the following steps:
- obtaining (110) a thermal model (*α_{device}, β_{device}*) of each thermal device (25),
- acquiring (120) a desired curtailment duration (Δ*t*),
- determining (130), for each thermal device (25), an individual indicator (I_{indiv}(t)) of consumption reduction potential for a plurality of successive instants (t) from the thermal model (*α_{device}, β_{device}*), and from the desired curtailment duration (Δ*t*),
each individual indicator (I_{indiv}(t)) being representative of the energy capable of being saved by said thermal device (25) during a duration less than or equal to the desired curtailment duration (Δ*t*), and
- for a plurality of time slots (tₕ), estimation (160) of the collective indicator (I_{col}(tₕ)) of energy consumption reduction from the individual indicators (I_{indiv}(t)).

2. Method according to claim 1, in which the collective indicator (I_{col}(tₕ)) of energy consumption reduction comprises a percentage of installed power (%_{eff}(tₕ)) of the set of thermal devices (25) suitable for being saved during a time slot (tₕ), called percentage of curtailable installed power.

3. Method according to claim 2, in which the step of acquisition (120) moreover comprises the acquisition of a number (*nb_{device}*) of installed thermal devices (25),
the collective indicator (I_{col}(tₕ)) moreover comprising, for each time slot (tₕ), the quantity of energy suitable for being saved (*E_{effaçable}*(*tₕ*)), said quantity (*E_{effaçable}*(*tₕ*)) being calculated from the number (*nb_{device}*) of installed thermal devices (25), from the percentage of curtailable installed power (%*_{eff}*(*tₕ*)) and from an average installed power (*Pinst_{device}*) of the thermal devices (25).

4. Method according to any one of the preceding claims, in which the electronic estimation device (20) is configured to receive temperature data (Tᵢₙₜ(t), Tₑₓₜ(t), T_{c}(t)) and power data (P(t)) originating from the thermal devices (25), and in which,
during the step of obtaining (110), the thermal model (*α_{device}*) is determined from the temperature data originating from the thermal devices (25).

5. Method according to the preceding claim, in which the step (110) of obtaining the thermal model (*α_{device}, β_{device}*) comprises, for each thermal device (25), the following substeps:
- measurement (112) of temperature(s) (Tᵢₙₜ(t), Tₑₓₜ(t), T_{c}(t)) and of power (P(t)), by the thermal device (25), at different successive instants (t), the plurality of instants (t) forming control sequences during which the thermal device (25) controls the temperature of the fluid and rest sequences during which no temperature control is performed,
- for each instant (t) of each rest sequence, determination (114) of an instantaneous coefficient of thermal loss (*α*(*t*)) from the temperature or temperatures (Tᵢₙₜ(t), Tₑₓₜ(t)) measured by the thermal device (25) at said instant (t), and from a duration (D) between two successive instants (t),
- for each rest sequence, calculation (116) of a sequence thermal loss coefficient (*α_{sequence}*) from the instantaneous coefficients of thermal loss (*α*(*t*)) of the rest sequence,
- calculation (118) of a device thermal loss coefficient (*α_{device}*) from the sequence thermal loss coefficients (*α_{sequence}*) of each sequence complying with the following constraints:
o a duration of the rest sequence is greater than a first predefined threshold, and
o a temperature (Tₑₓₜ(t)) in an environment of the thermal device (25) complies with a predefined constraint,
the model (*α_{device}, β_{device}*) comprising each device thermal loss coefficient (*α_{device}*).

6. Method according to any one of the preceding claims, in which the step of acquisition (120) moreover comprises the acquisition of a desired maximum deviation (*ε_{M}*) from a setpoint temperature (T_{c}(t)) specific to each thermal device (25),
during the step of determination (130), each individual indicator (I_{indiv}(t)) is determined as a function of the setpoint temperature (T_{c}(t)) specific to the thermal device (25) and of the maximum deviation (*ε_{M}*)*.*

7. Method according to claims 5 and 6, in which each individual indicator (I_{indiv}(t)) is moreover determined from the coefficient (*α_{device}*) of thermal loss associated with each thermal device (25),
each individual indicator (I_{indiv}(t)) depending on the energy suitable for being saved by deactivating the device without a temperature (Tᵢₙₜ(t)) specific to the thermal device (25) deviating from the setpoint temperature (T_{c}(t)) by more than the maximum deviation (*ε_{M}*) from the setpoint temperature (T_{c}(t)).

8. Method according to the preceding claim, moreover comprising, between the steps of determination (130) and of estimation (160), a step of calculation (150) during which a plurality of quantiles (Qᵢ(tₕ)) of individual indicators (I_{indiv}(t)) are calculated at a plurality of time slots (tₕ),
the step of estimation (160) comprising the following substeps which are iterated a first number of times:
- for each time slot, random selection (164) of a second number of quantiles (Qᵢ(tₕ)),
- calculation (165) of an average of the selected quantiles (Qᵢ(tₕ)),
the collective indicator (I_{col}(tₕ)) of energy consumption reduction comprising, for each time slot, the averages of the quantiles (Qᵢ(tₕ)) calculated.

9. Method according to the preceding claim, in which the step of acquisition (120) moreover comprises the acquisition of a desired confidence percentage (%*_{conf}*),
the collective indicator (I_{col}(tₕ)) of energy consumption reduction comprising, for each time slot (tₕ), the percentile of the averages of the quantiles (Qᵢ(tₕ)), calculated according to the desired confidence percentage (%*_{conf}*).

10. Method according to claim 9, in which the step of acquisition (120) moreover comprises the acquisition of a type of day chosen from among a plurality of types of day,
the step of estimation (160) comprising a sub-step of filtering (162) of quantiles (Qᵢ(tₕ)) of individual indicators as a function of the type of day associated therewith, the collective indicator (I_{col}(tₕ)) being estimated only from the quantiles (Qᵢ(tₕ)) of individual indicators associated with a type of day corresponding to the type of day received.

11. Method according to any one of the preceding claims, in which the method comprises, between the step of determination (130) and the step of estimation (160), a step of association (140) with each individual indicator (I_{indiv}(t)) of consumption reduction potential, of a type of day as a function of an average value of a temperature (Tₑₓₜ(t)) in an environment of the thermal device (25) associated during the determination (140) of the individual indicator (I_{indiv}(t)).

12. Method according to any one of the preceding claims, in which each thermal device (25) is of a type chosen from the group consisting of:
- a radiator,
- an air conditioner,
- a hot water tank,
- a water heater,
- a refrigerator, and
- a heat pump,
each thermal device (25) preferably being of the same type.

13. Method according to any one of the preceding claims, in which the method moreover comprises a step (170) of displaying the collective indicator on a display (30) of the electronic estimation device (20).

14. Method according to any one of the preceding claims, in which, during the step of obtaining (110), the thermal model (*α_{device}, β_{device}*) moreover comprises a coefficient of thermal gain (*β_{device}*) obtained for each device (25),
during the step of determination (130), an individual duration (*ρ_{indiv}*) of return to a thermal equilibrium after a curtailment is determined for each device (25) and for each instant (t).

15. Method according to the preceding claim, in which the step (110) of obtaining the thermal model (*α_{device}, β_{device}*) comprises, for each thermal device (25), the following sub-steps:
- measurement (112) of temperature(s) (Tᵢₙₜ(t), Tₑₓₜ(t), T_{c}(t)) and of power (P(t)), by the thermal device (25), at different successive instants (t), the plurality of instants (t) forming control sequences during which the thermal device (25) controls the temperature of the fluid and rest sequences during which no control of the temperature is performed,
- for each instant (t) of each control sequence, determination (114) of an instantaneous coefficient of thermal gain (*β*(*t*)) from the temperature(s) (Tᵢₙₜ(t), Tₑₓₜ(t)) measured by the thermal device (25) at said instant (t), from the power (*P*(*t*)), and from a duration (D) between two successive instants (t),
- for each control sequence, calculation (116) of a coefficient of thermal gain of sequence (*β_{sequence}*) from the instantaneous coefficients of thermal gain (*β*(*t*)) of the control sequence,
- calculation (118) of a coefficient of thermal gain of device (*β_{device}*) from the coefficients of thermal gain of sequence (*β_{sequence}*) of each control sequence,
the model (*α_{device}, β_{device}*) comprising each coefficient of thermal gain of device (*β_{device}*).

16. Computer program product comprising software instructions which, when they are executed by a computer, implement the method of estimation according to any one of the preceding claims.

17. Device (20) for estimating a collective energy consumption reduction indicator (I_{col}(tₕ)) for a set of thermal devices (25), each thermal device (25) being capable of controlling a temperature of a fluid in a dwelling (15), the estimation device (20) comprising:
- an obtaining module (50) configured to obtain a thermal model (*α_{device}*) of each thermal device (25),
- an acquisition module (55) configured to acquire a desired curtailment duration (Δ*t*),
- a determination module (60) configured to determine, for each thermal device (25), an individual indicator (I_{indiv}(t)) of consumption reduction potential for a plurality of successive instants (t) from the thermal model (*α_{device}*), and from the desired curtailment duration (Δ*t*),
each individual indicator (I_{indiv}(t)) being representative of the energy capable of being saved by said thermal device (25) during a duration less than or equal to the desired load shedding duration (Δ*t*), and
- an estimation module (80) configured to estimate, for a plurality of time slots (tₕ), the collective indicator (I_{col}(tₕ)) of reduction of energy consumption from the individual indicators (I_{indiv}(t)).

18. Device (20) according to claim 17, in which the acquisition module (55) is configured to moreover acquire a desired maximum deviation (*ε_{M}*) from a setpoint temperature (T_{c}(t)),
the determination module (60) is configured to determine the individual indicator (I_{indiv}(t)) of consumption reduction potential moreover from the desired maximum deviation (*ε_{M}*).
